# EUROPÄISCHE PATENTSCHRIFT

(11) **EP 1 255 799 B1**
(45) Veröffentlichungstag und Bekanntmachung des Hinweises auf die Patenterteilung: **02.11.2006**
(21) Anmeldenummer: 00967700.6
(22) Anmeldetag: 18.09.2000
(51) Int. Cl.: C09K 19/30, C09K 19/32

(54) **FLÜSSIGKRISTALLINE PHENOLESTER**
LIQUID CRYSTALLINE PHENOL ESTERS
CRISTAUX LIQUIDES SOUS FORME D'ESTERS PHENOLIQUES

(30) Priorität: 06.10.1999 DE 19947954
(43) Veröffentlichungstag der Anmeldung: 13.11.2002
(73) Patentinhaber: Merck Patent GmbH, 64293 Darmstadt (DE)
(72) Erfinder: REIFFENRATH, Volker, 64380 Rossdorf (DE); HECKMEIER, Michael, 64625 Bensheim (DE); POETSCH, Eike, 64367 Mühltal (DE); KRAUSE, Joachim, 64807 Dieburg (DE); BINDER, Werner, 64807 Dieburg (DE); SCHULER, Brigitte, 63808 Haibach (DE); GÖTZ, Achim, 64665 Alsbach-Hähnlein (DE)
(86) Internationale Anmeldenummer: PCT/EP2000/009133
(87) Internationale Veröffentlichungsnummer: WO 2001/025370

(56) Entgegenhaltungen:
- EP-A- 0 446 911
- EP-A- 0 460 436
- EP-A- 0 738 709
- EP-A- 0 765 926
- DE-A- 19 859 421

## Beschreibung

Die vorliegende Erfindung betrifft flüssigkristalline Phenolester für ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-lsolator-Metall).

Derartige MFK-Anzeigen eignen sich insbesondere für TV-Anwendungen (z.B. Taschenfemseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei lowvolt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbariceit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Aus der WO 92/05 230 sind Verbindungen der Formel 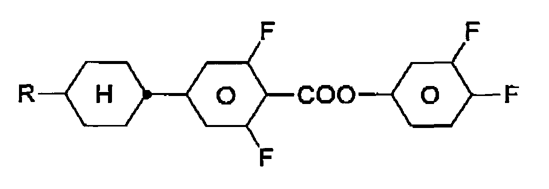 bekannt,
diese weisen jedoch vergleichsweise niedrige Klärpunkte auf. Weitere Phenolesterverbindungen werden in der EP 0446911 A1, EP 0738709 A2, EP 0765926 A1 und EP 0460436 A2 offenbart.

Es wurde nun gefunden, daß diese Aufgabe gelöst werden kann, wenn man die erfindungsgemäßen flüssigkristallinen Phenolester verwendet.

Gegenstand der Erfindung sind somit flilssigkristalline Medien enthaltend mindestens einen Phenolester der Formel I, 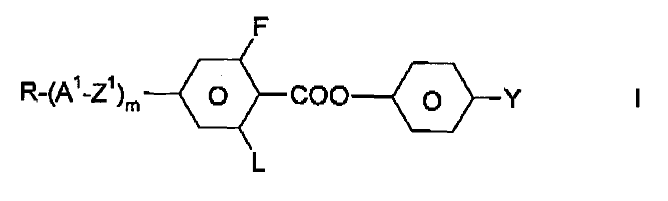 worin
- R: einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, -C=C-, -OC-O-, oder -O-CO- so ersetzt sein können, daß O-Atome nicht direkt miteinander verknüpft sind,
- A¹: a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, einen Naphthalin-2,6-diyl, Decahydronaphthalin-2,6-diyl, und 1,2,3,4-Tetrahydronaphthalin-2,6-diyl
wobei die Reste a), b) und c) ein oder mehrfach durch Halogenatome substituiert sein können,
- Z¹: -CO-O-, -O-CO-, -CF₂O-, -OCF₂-, -CH₂O-, -OCH₂-, -CH₂CH₂-, -C₂F₄-, -CH=CH-, -C≡C- oder eine Einfachbindung,
- Y: F, Cl, CN oder ein einfach oder mehrfach halogenierter Alkyl-, Alkenyl-, Alkenyloxy- oder Alkoxyrest mit 1 bis 5 C-Atomen,
- L: H oder F, und
- m: O, 1 oder 2
bedeutet,
und
eine oder mehrere Verbindungen ausgewählt aus der Gruppe bestehend aus den allgemeinen Formeln II bis IX: 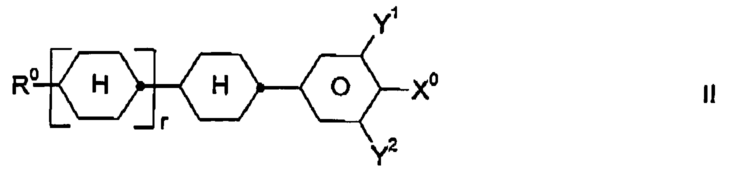 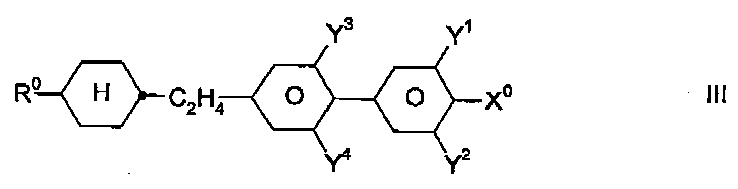 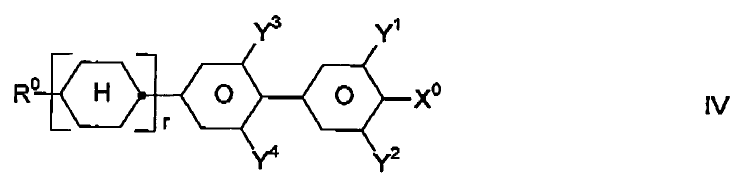 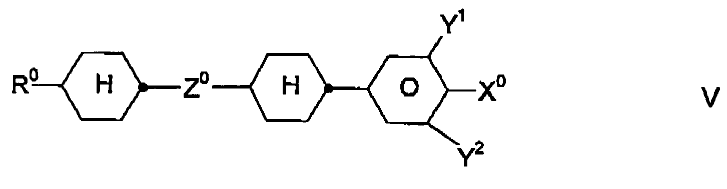 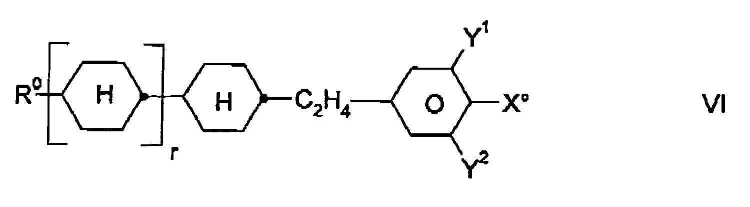 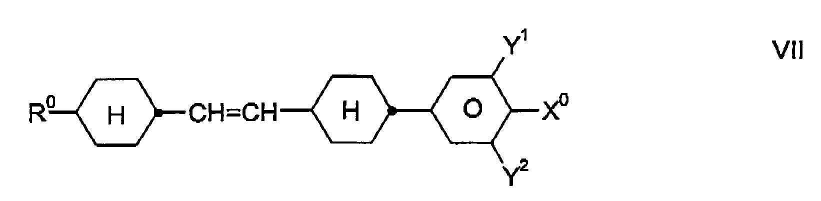 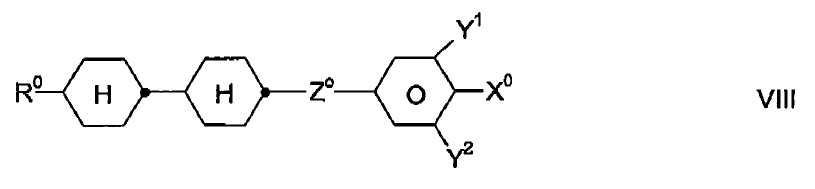 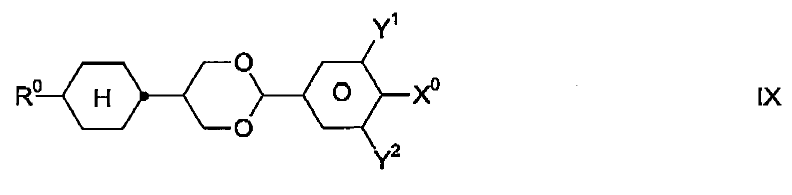 worin die einzelnen Reste die folgenden Bedeutungen haben:
- R⁰:: n-Alkyl, Oxaalkyl, Fluoralkyl, Alkenyloxy oder Alkenyl mit jeweils bis zu 9 C-Atomen
- X⁰:: F, Cl, halogeniertes Alkyl, Alkenyl, Alkenyloxy oder Alkoxy mit 1 bis 6 C-Atomen,
- Z⁰: -C₂H₄-, -C₂F₄-, -CF₂O-, -OCF₂- oder -COO-,
- Y¹,Y², Y³ und Y⁴: jeweils unabhängig voneinander H oder F, und
- r:: 0 oder 1.
und deren Verwendung in flüssigkristallinen Medien.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Insbesondere zeichnen sich die erfindungsgemäßen Verbindungen durch ihren hohen Klärpunkt aus. Chemisch, thermisch und gegen Licht sind sie stabil.

Gegenstand der Erfindung sind insbesondere die Verbindungen der Formel I, worin R für Alkyl mit 1 bis 10 C-Atomen steht oder ein Alkenylrest mit 2 bis 10 C-Atomen ist.

Insbesondere bevorzugt sind Verbindungen der Formel I, worin L F bedeutet. m ist vorzugsweise 1. Z¹ ist vorzugsweise eine Einfachbindung, ferner -CF₂O-, -OCF₂-, -C₂F₄-, -CH₂O-, -OCH₂- oder -COO-.

Falls R einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R einen Alkenylrest bedeutet, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2-oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6-oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome.

Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)-propyl, 3-(Ethoxycarbonyl)propyl, 4-(Methoxycarbonyl)-butyl.

Falls R einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position.

Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen der Formel I mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verbindungen der Formel I mit S_{A}-Phasen eignen sich beispielsweise für thermisch adressierte Displays.

Verzweigte Gruppen dieser Art enthalten in der Regel nicht mehr als eine Kettenverzweigung. Bevorzugte verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Y bedeutet vorzugsweise F, Cl, CN, CF₃, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCFHCFHCF₃, OCH₂CF₂CF₃, OCF₂CF₂CF₃, OCF₂CFHCFH₂, OCF₂CH₂CF₂H, OCFHCF₂CFH₂, OCFHCFHCF₂H, OCFHCH₂CF₃, OCH₂CFHCF₃, OCH₂CF₂CF₂H, OCF₂CFHCH₃, OCF₂CH₂CFH₂, OCFHCF₂CH₃, OCFHCFHCFH₂, OCFHCH₂CF₃, OCH₂CF₂CFH₂, OCH₂CFHCF₂H, OCF₂CH₂CH₃, OCFHCFHCH₃, OCFHCH₂CFH₂, OCH₂CF₂CH₃, OCH₂CFHCFH₂, OCH₂CH₂CF₂H, OCHCH₂CH₃, OCH₂CFHCH₃, OCH₂CH₂CF₂H, OCCIFCF₃, OCCIFCCIF₂, OCCIFCFH₂, OCFHCCI₂F, OCCIFCF₂H, OCCIFCCIF₂, OCF₂CCIH₂, OCF₂CCI₂H, OCF₂CCI₂F, OCF₂CCIFH, OCF₂CCIF₂, OCF₂CF₂CCIF₂, OCF₂CF₂CCI₂F, OCCIFCF₂CF₃, OCCIFCF₂CF₂H, OCCIFCF₂CCIF₂, OCCIFCFHCF₃, OCCIFCCIFCF₃, OCCI₂CF₂CF₃, OCCIHCF₂CF₃, OCCIFCF₂CF₃, OCCIFCCIFCF₃, OCF₂CCIFCFH₂, OCF₂CF₂CCI₂F, OCF₂CCI₂CF₂H, OCF₂CH₂CCIF₂, OCCIFCF₂CFH₂, OCFHCF₂CCI₂F, OCCIFCFHCF₂H, OCCIFCCIFCF₂H, OCFHCFHCCIF₂, OCCIFCH₂CF₃, OCFHCCI₂CF₃, OCCI₂CFHCF₃, OCH₂CCIFCF₃, OCCI₂CF₂CF₂H, OCH₂CF₂CCIF₂, OCF₂CCIFCH₃, OCF₂CFHCCI₂H, OCF₂CCI₂CFH₂, OCF₂CH₂CCI₂F, OCCIFCF₂CH₃, OCFHCF₂CCI₂H, OCCIFCCIFCFH₂, OCFHCFHCCI₂F, OCCIFCH₂CF₃, OCFHCCI₂CF₃, OCCI₂CF₂CFH₂, OCH₂CF₂CCl₂F, OCCI₂CFHCF₂H, OCCIHCCIFCF₂H, OCF₂CCIHCCIH₂, OCF₂CH₂CCI₂H, OCClFCFHCH₃, OCF₂CClFCCl₂H, OCClFCH₂CFH₂, OCFHCCl₂CFH₂, OCCl₂CF₂CH₃, OCH₂CF₂CClH₂, OCCl₂CFHCFH₂, OCH₂CClFCFCl₂, OCH₂CH₂CF₂H, OCClHCClHCF₂H, OCH₂CCl₂CF₂H, OCClFCH₂CH₃, OCFHCH₂CCl₂H, OCClHCFHCClH₂, OCH₂CFHCCl₂H, OCCl₂CH₂CF₂H, OCH₂CCl₂CF₂H, CH=CF₂, CF=CF₂, OCH=CF₂, OCF=CF₂, CH=CHF, OCH=CHF, CF=CHF, OCF=CHF, insbesondere F, Cl, CN, CF₃, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCF₂CF₂CF₃, OCF₂CHFCF₃, OCClFCF₂CF₃.

Der Einfachheit halber bedeuten im folgenden A² einen Rest der Formel 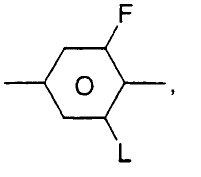 Cyc einen 1,4-Cyclohexylenrest, A³ 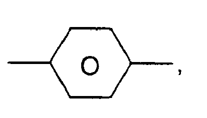 Che einen 1,4-Cyclohexenylrest, Dio einen 1,3-Dioxan-2,5-diylrest, Dit einen 1,3-Dithian-2,5-diylrest, Phe einen 1,4-Phenylenrest, Pyd einen Pyridin-2,5-diylrest, Pyr eine Pyrimidin-2,5-diylrest, Bi einen Bicyclo[2.2.2]-octylenrest, PheF einen 2- oder 3-Fluor-1,4-phenylenrest, PheFF einen 2,6-Difluor-1,4-phenylenrest, Nap einen substituierten oder unsubstituierten Naphthalinrest, Dec einen Decahydronaphthalinrest.

Die Verbindungen der Formel I umfassen dementsprechend die bevorzugten Verbindungen mit zwei Ringen der Teilformeln la:

R-A²-COO-A³-Y la.

Verbindungen mit drei Ringen der Teilformeln Ib und Ic:

R-A¹-A²-COO-A³-Y Ib

R-A¹-Z¹-A²-COO-A³-Y Ic

sowie Verbindungen mit vier Ringen der Teilformeln Id bis Ig:

R-A¹-A¹-A²-COO-A³-Y Id

R-A¹-Z¹-A¹-A²-COO-A³-Y le

R-A¹-A¹-Z¹-A²-COO-A³-Y If

R-A¹-Z¹-A¹-Z¹-A²-COO-A³-Y Ig.

In den Teilformeln Id bis Ig können die Ringe A¹ und die Brücken Z¹ jeweils gleich oder verschieden sein.

Darunter sind besonders diejenigen Verbindungen der Teilformeln Ia, Ib und Ic bevorzugt.

In den Verbindungen der vor- und nachstehenden Formeln bedeutet Y vorzugsweise F, CN, OCF₃, OCHF₂, CF₃, OCHFCF₃, OC₂F₅ oder OCF₂CHFCF₃.

R bedeutet vorzugsweise geradkettiges Alkyl, Alkoxy, Alkenyloxy oder Alkenyl mit bis zu 10 C-Atomen.

A¹ bedeutet vorzugsweise Phe, PheF, PheFF, Cyc oder Che, ferner Pyr oder Dio, Dec oder Nap. Bevorzugt enthalten die Verbindungen der Formel I nicht mehr als einen der Reste Bi, Pyd, Pyr, Dio, Dit Nap oder Dec.

Bevorzugt sind auch alle Verbindungen der Formel I sowie aller Teilformeln, in denen A¹ ein ein- oder zweifach substituiertes 1,4-Phenylen bedeutet. Insbesondere sind dies 2-Fluor-1,4-phenylen, 3-Fluor-1,4-phenylen, 2,3-Difluor-1 ,4-phenylen sowie 2,6-Difluor-1,4-phenylen.

Bevorzugte kleinere Gruppen von Verbindungen der Formel I sind diejenigen der Teilformeln I1 bis I12:

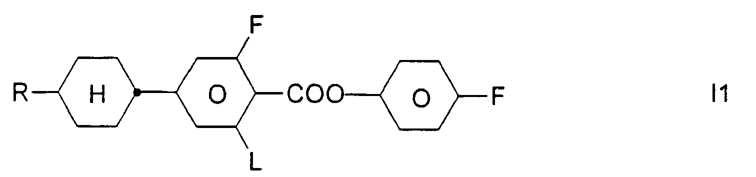

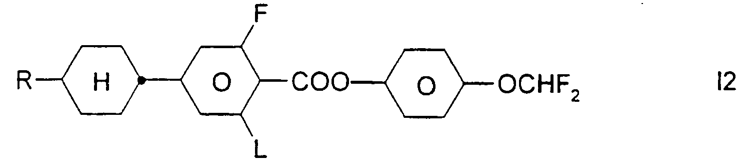

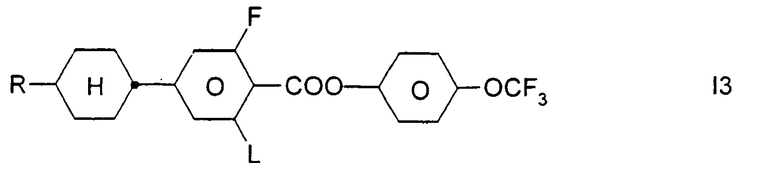

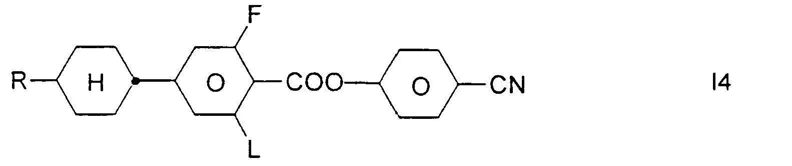

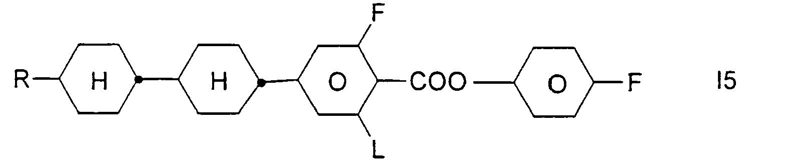

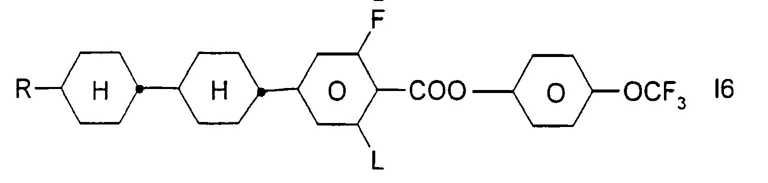

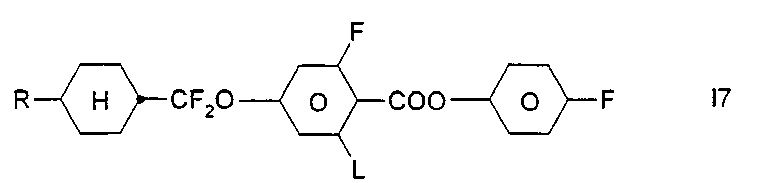

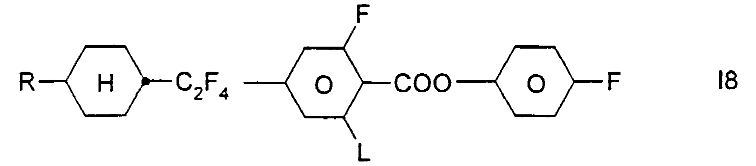

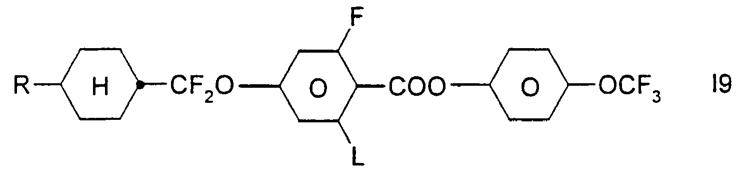

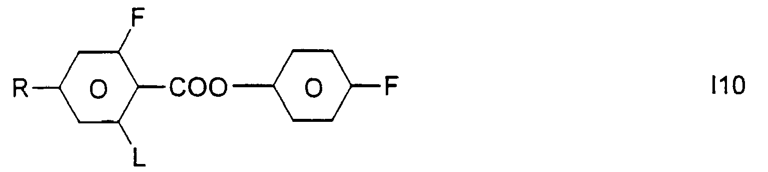

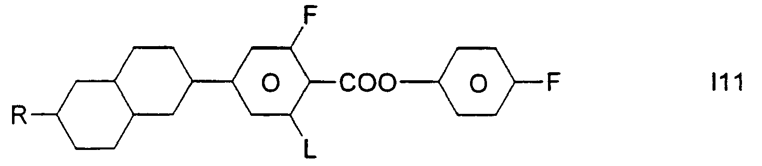

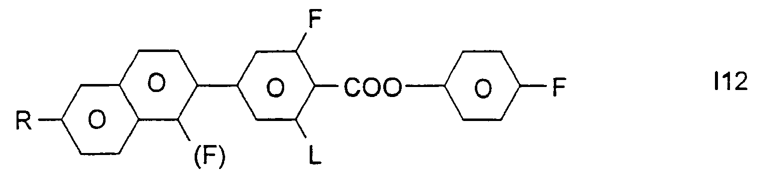

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Synthese der Ester der Formel I kann beispielsweise aus den entsprechenden Säuren und Phenolen unter Wasserabspaltung, z. B. durch Dicyclohexylcarbodiimid, erfolgen.

Die Verbindungen können z.B. gemäß dem folgendem Schema hergestellt werden:

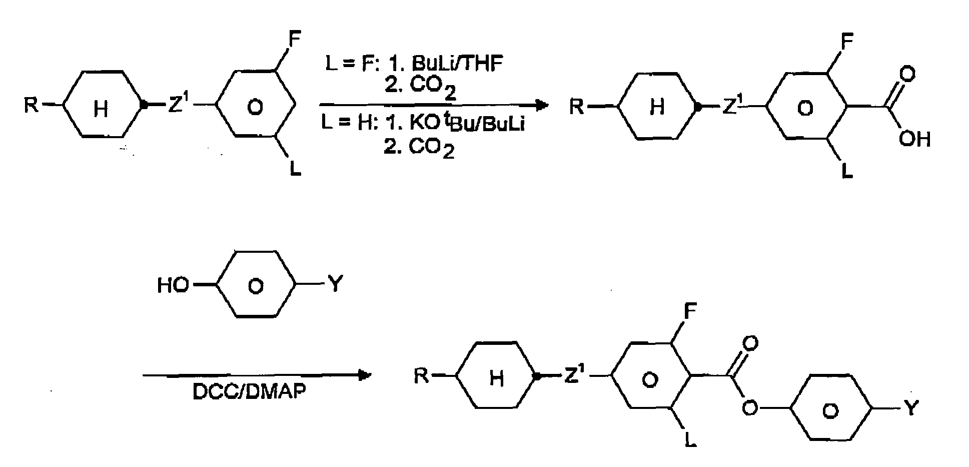

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfugung stehenden Parameterraumes.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Flüssigkristallmischungen, wie z. B. MLC-6476 und MLC-6625 (Merck KGaA, Darmstadt, Deutschland) weisen zwar vergleichbare Klärpunkte und Tieftemperaturstabilitäten auf, sie haben jedoch viel höhere Δn-Werte von ca. 0,075 als auch viel höhere Schwellenspannungen von ca. ≥ 1,7 V.

Andere Mischungs-Systeme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkte oberhalb 80°, vorzugsweise oberhalb 90°, besonders bevorzugt oberhalb 100 °C, gleichzeitig dielektrische Anisotropiewerte Δε ≥ 4, vorzugsweise ≥ 6 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen liegen unterhalb 1,5 V, vorzugsweise unterhalb 1,3 V, besonders bevorzugt < 1,0 V.

Es versteht sich, daß durch geeignete Wahl der Komponenten der erfindungsgemäßen Mischungen auch höhere Klärpunkte (z.B. oberhalb 110°) bei höheren Schwellenspannung oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität υ₂₀ bei 20 °C ist vorzugsweise < 60 mm² · s⁻¹,
besonders bevorzugt < 50 mm² · s⁻¹. Der nematische Phasenbereich ist vorzugsweise mindestens 90°, insbesondere mindestens 100°.
Vorzugsweise erstreckt sich dieser Bereich mindestens von -30° bis +80°.

Messungen des "Capacity Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 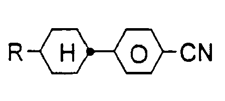 oder Ester der Formel

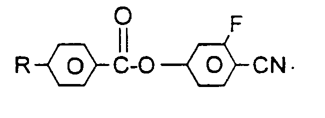

Auch die UV-Stabilität der erfindungsgemäßen Mischungen ist erheblich besser, d. h. sie zeigen eine deutlich kleinere Abnahme des HR unter UV-Belastung.

Vorzugsweise basieren die erfindungsgemäßen Medien auf mehreren (vorzugsweise zwei, drei oder mehr) Verbindungen der Formel I, d.h. der Anteil dieser Verbindungen ist 5-95 %, vorzugsweise 10-60 % und besonders bevorzugt im Bereich von 20-50 %.

Die einzelnen Verbindungen der Formeln I bis IX und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Medium enthält Verbindungen der Formel I, worin R vorzugsweise Ethyl und/oder Propyl, ferner Butyl und Pentyl bedeutet. Verbindungen der Formel I mit kurzen Seitenketten R beeinflussen positiv die elastischen Konstanten, insbesondere K₁, und führen zu Mischungen mit besonders niedrigen Schwellenspannungen.
- Die Verbindung der Formel IV ist vorzugsweise 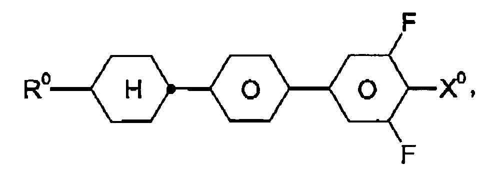 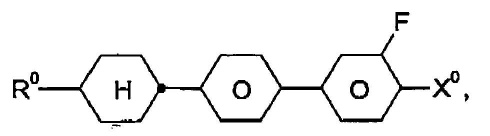 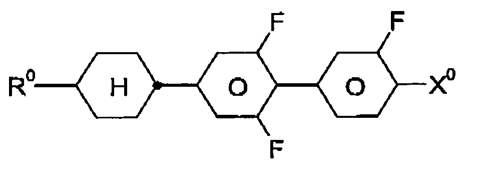 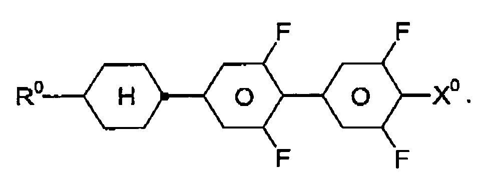 oder 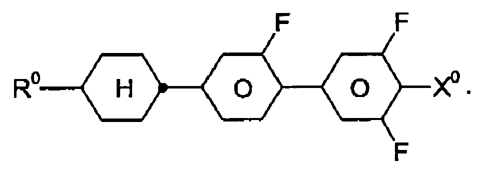
- Medium enthält zusätzlich eine oder mehrere Verbindungen der Formeln 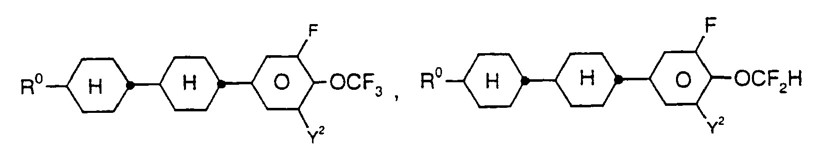 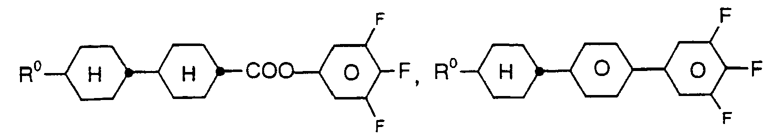 und/oder 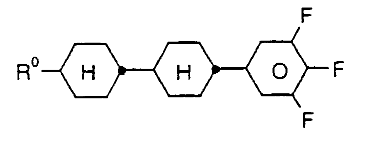
worin R⁰ und Y² die oben angegebene Bedeutung haben.
- Medium enthält zusätzlich eine oder mehrere Verbindungen ausgewählt aus der Gruppe bestehend aus den allgemeinen Formeln X bis XV: 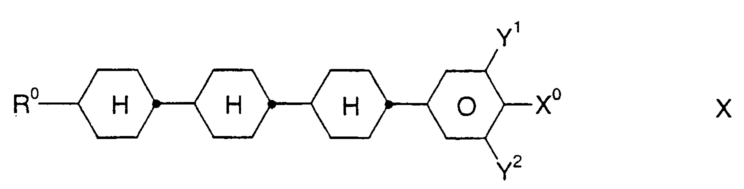 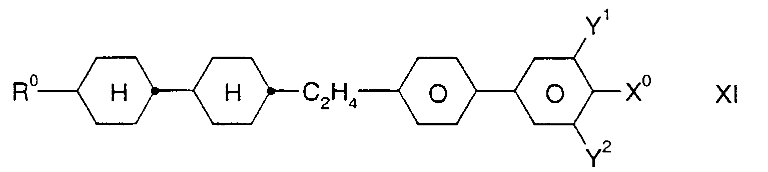 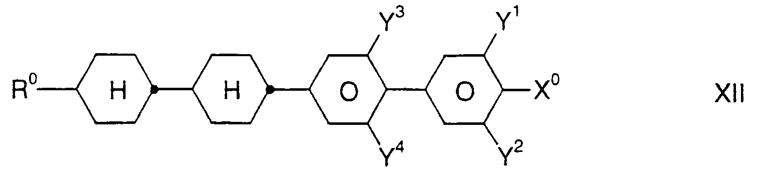 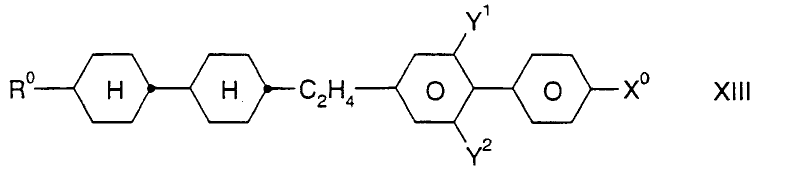 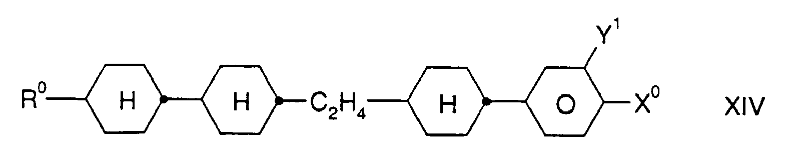 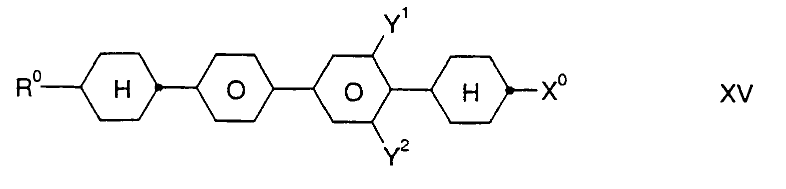
worin R⁰, X⁰, Y¹ ,Y², Y³ und Y⁴ jeweils unabhängig voneinander eine der in Anspruch 7 angegebene Bedeutung haben, vorzugsweise bedeutet X⁰ F, Cl, CF₃, OCF₃, OCHF₂ und R⁰ ist Alkyl, Oxaalkyl, Fluoralkyl, Alkenyl oder Alkenyloxy mit jeweils bis zu 6 C-Atomen bedeutet.
- Der Anteil an Verbindungen der Formeln I bis IX zusammen beträgt im Gesamtgemisch mindestens 50 Gew.-%.
- Der Anteil an Verbindungen der Formel I beträgt im Gesamtgemisch 5 bis 50 Gew.-%.
- Der Anteil an Verbindungen der Formeln II bis IX im Gesamtgemisch beträgt 30 bis 70 Gew.-%. 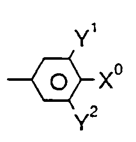 ist vorzugsweise 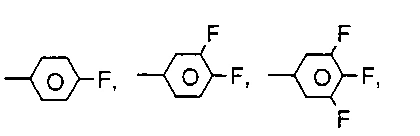 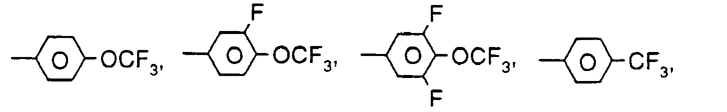 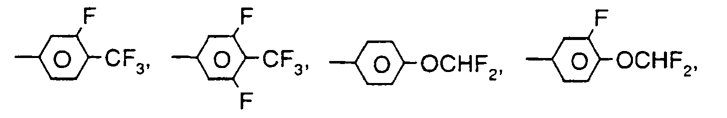 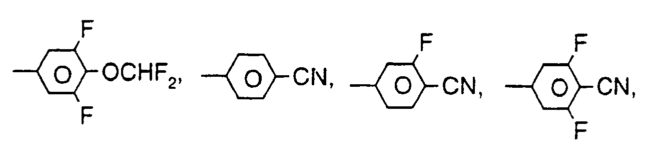 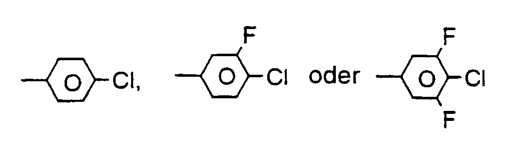
- Das Medium enthält Verbindungen der Formeln II, III, IV, V, VI, VII, VIII und/oder IX.
- R⁰ ist geradkettiges Alkyl oder Alkenyl mit 2 bis 6 C-Atomen.
- Das Medium besteht im wesentlichen aus Verbindungen der Formeln I bis XV.
- Das Medium enthält weitere Verbindungen, vorzugsweise ausgewählt aus der folgenden Gruppe bestehend aus den allgemeinen Formeln XVI bis XIX: 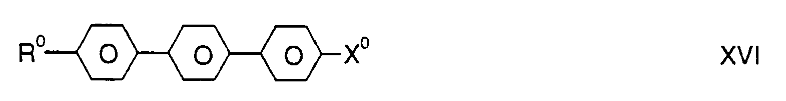 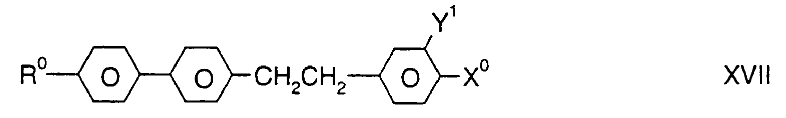 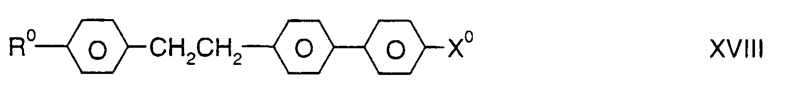 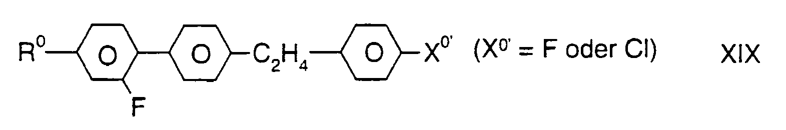
worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält weitere Verbindungen, vorzugsweise ausgewählt aus der folgenden Gruppe bestehend aus den Formeln RI bis RVI: 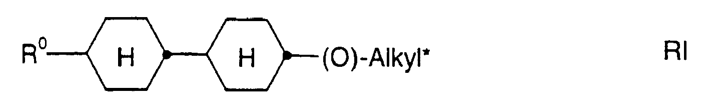 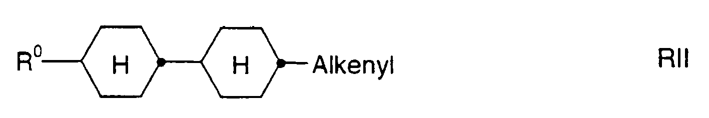 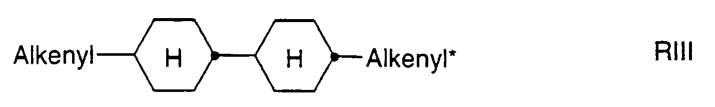 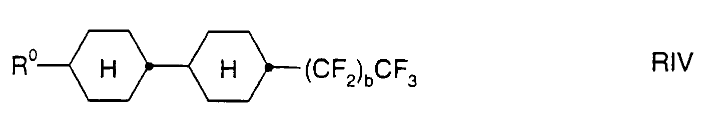 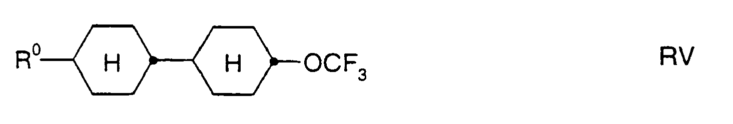 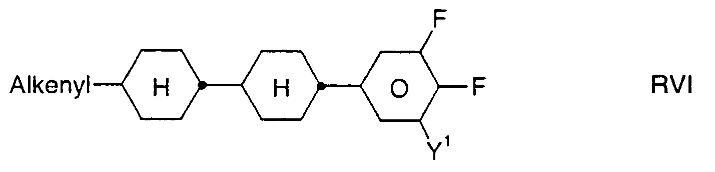
worin
- R⁰: n-Alkyl, Oxoalkyl, Fluoralkyl, Alkenyloxy oder Alkenyl mit jeweils bis zu 9 C-Atomen,
- b: 0, 1 oder 2,
- Y¹: H oder F,
- Alkyl*: geradkettiger Alkylrest mit bis zu 9 C-Atomen,
Alkenyl oder Alkenyl*
jeweils unabhängig voneinander einen Alkenylrest mit bis zu 9 C-Atomen
bedeuten.
- Das Medium enthält vorzugsweise ein oder mehrere Verbindungen der Formeln 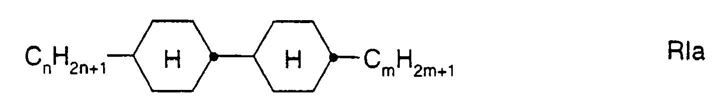 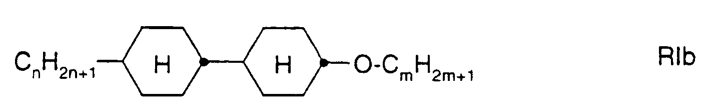 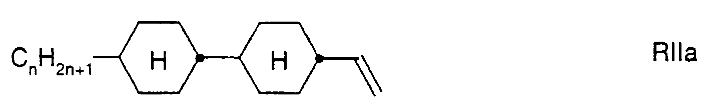 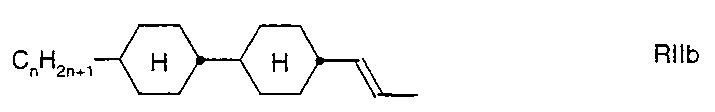 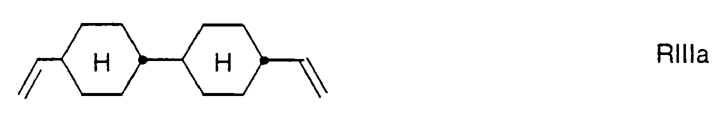 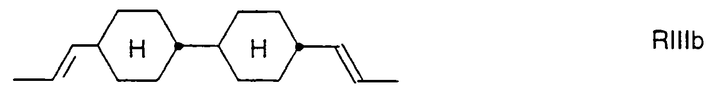 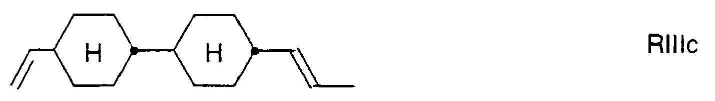 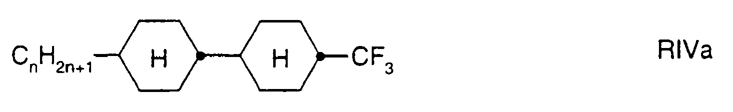
worin n und m jeweils eine ganze Zahl von 1-9 bedeuten.
- Das Gewichtsverhältnis I: (II + III + IV + V + VI + VII + VIII + IX) ist vorzugsweise 1 : 10 bis 10 : 1.
- Medium besteht im wesentlichen aus Verbindungen ausgewählt aus der Gruppe bestehend aus den allgemeinen Formeln I bis XV.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III, IV, V, VI, VII, VII und/oder IX zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Die Verbindungen der Formeln I bis IX sind farblos, stabil und untereinander und mit anderen Flüssigkristallmaterialien gut mischbar.

Der Ausdruck "Alkyl" oder "Alkyl*"umfaßt geradkettige und verzweigte Alkylgruppen mit 1-9 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" oder "Alkenyl*" umfaßt geradkettige und verzweigte Alkenylgruppen mit bis zu 9 Kohlenstoffatomen, insbesondere die geradkettigen Gruppen. Besonders bevorzugte Alkenylgruppen sind C₂₋C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇4-Alkenyl. Beispiele bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine Gruppe -CH₂CH₂- in Z¹ führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI + VII + VII + IX hängt weitgehend von den gewünschten Eigenschaften, von der Wahl der Komponenten der Formeln I, II, III, IV, V, VI, VII, VIII und/oder IX und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XV ist.

In einer besonders bevorzugten Ausführungsform enthalten die erfindungsgemäßen Medien Verbindungen der Formel II bis IX (vorzugsweise II und/oder III), worin X⁰ OCF₃, OCHF₂, F, OCH=CF₂, OCF=CF₂, OCF₂CHFCF₃, oder OCF₂-CF₂H bedeutet. Eine günstige synergistische Wirkung mit den Verbindungen der Formel I führt zu besonders vorteilhaften Eigenschaften.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{C} eine smektische C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5fachen Wert von V₁₀. Δn bezeichnet die optische Anisotropie und nₒ den Brechungsindex. Δε bezeichnet die dielektrische Anisotropie (Δε = ε_{∥} - ε_{┴}, wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d · Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |

Bevorzugte Mischungskomponenten finden sich in den Tabellen A und B.

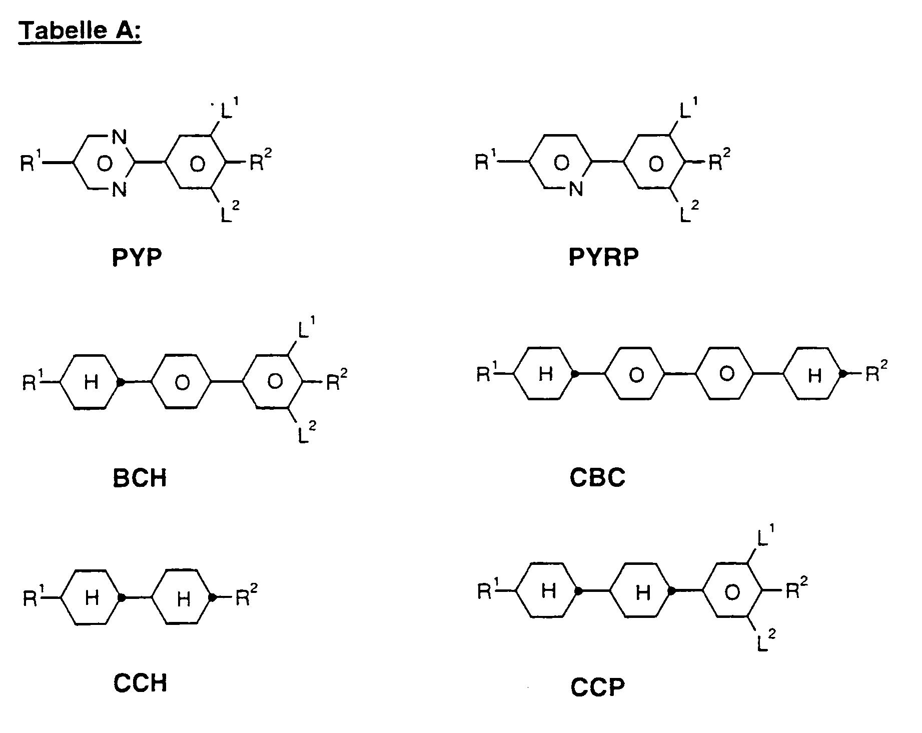

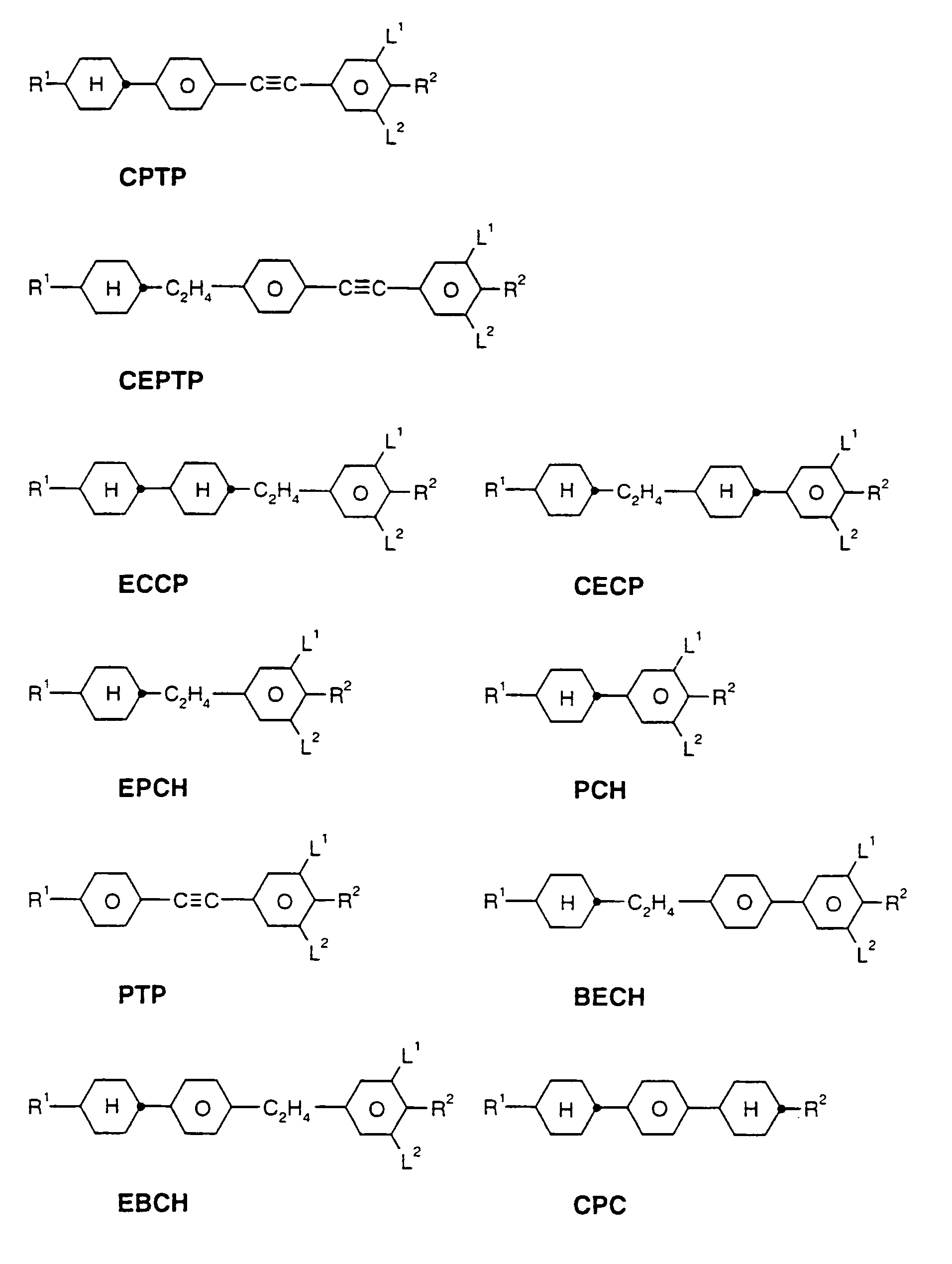

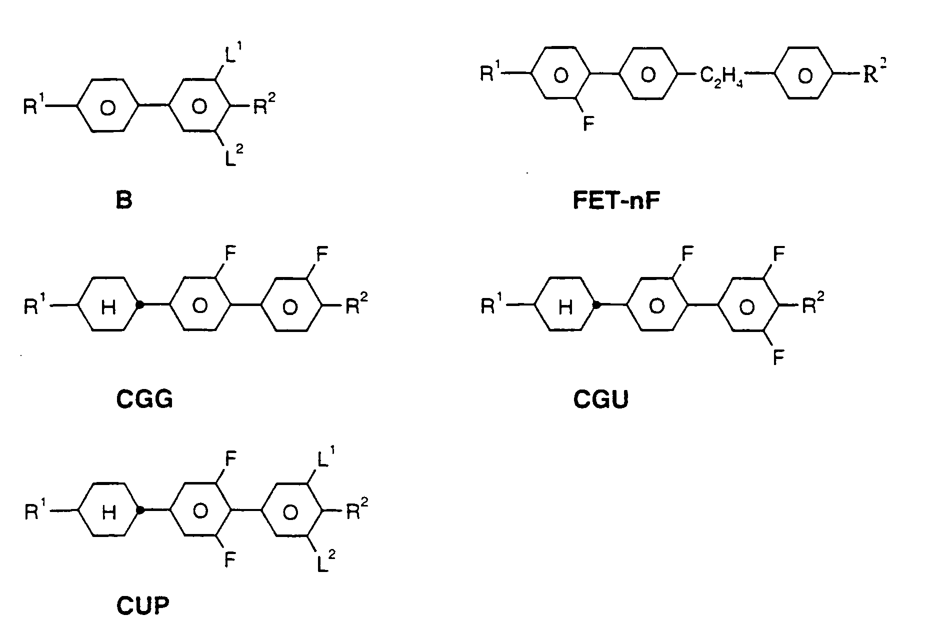

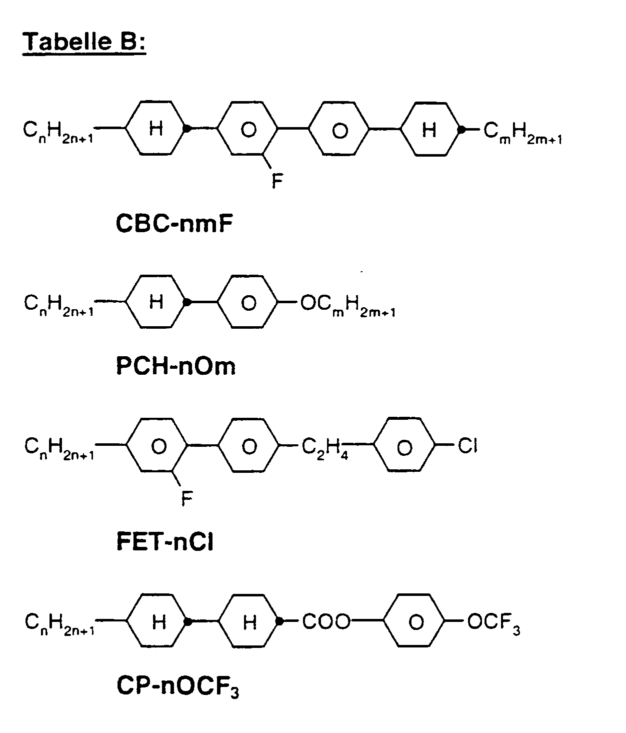

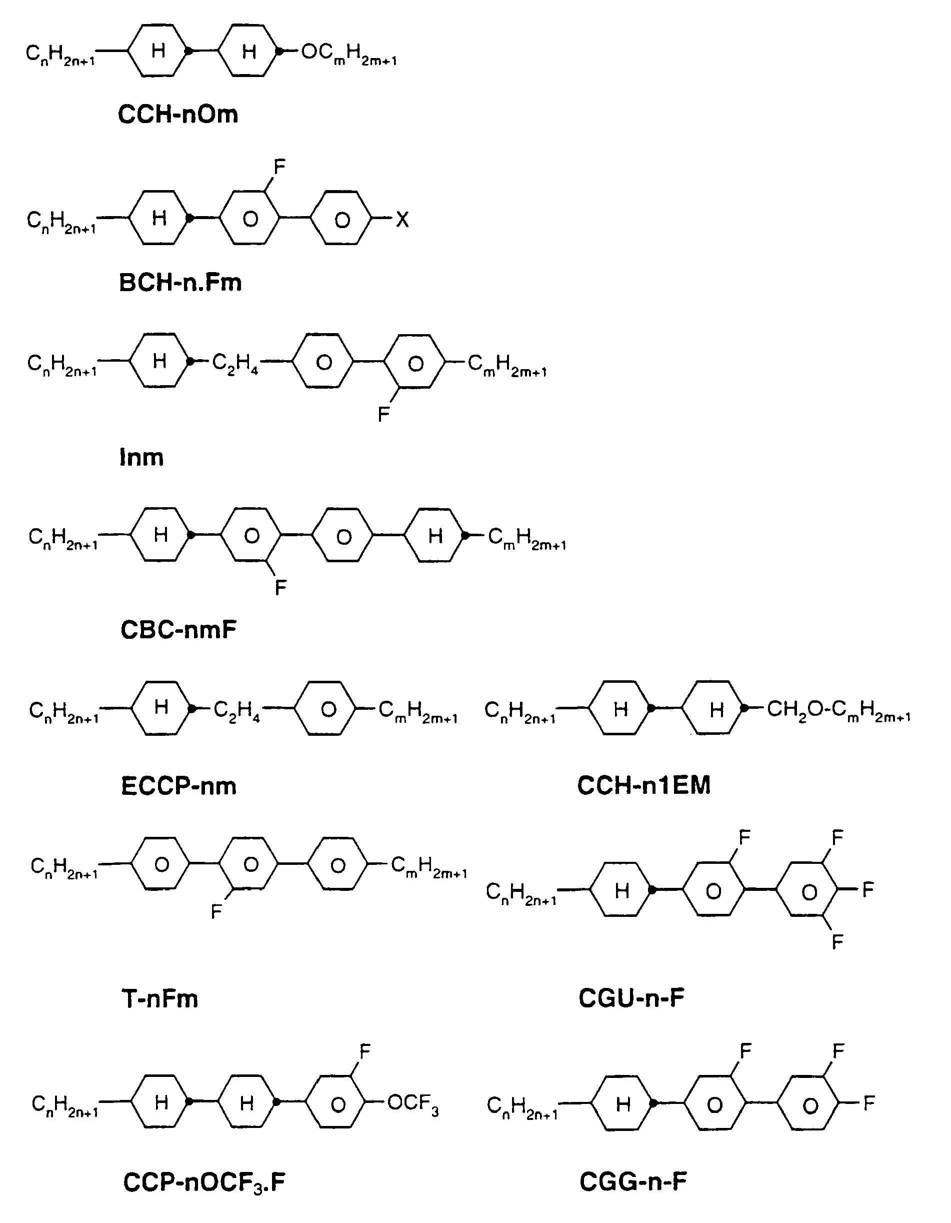

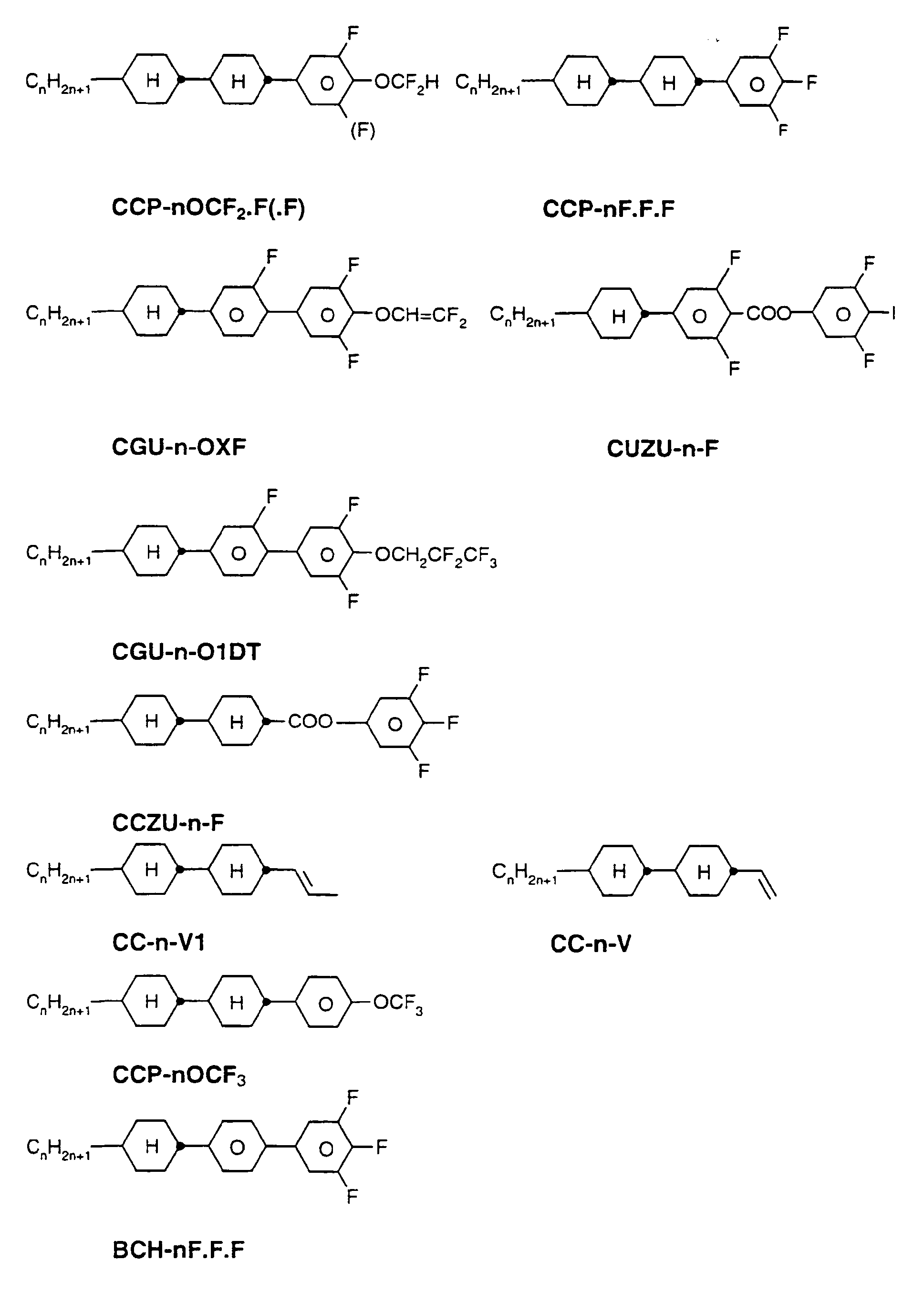

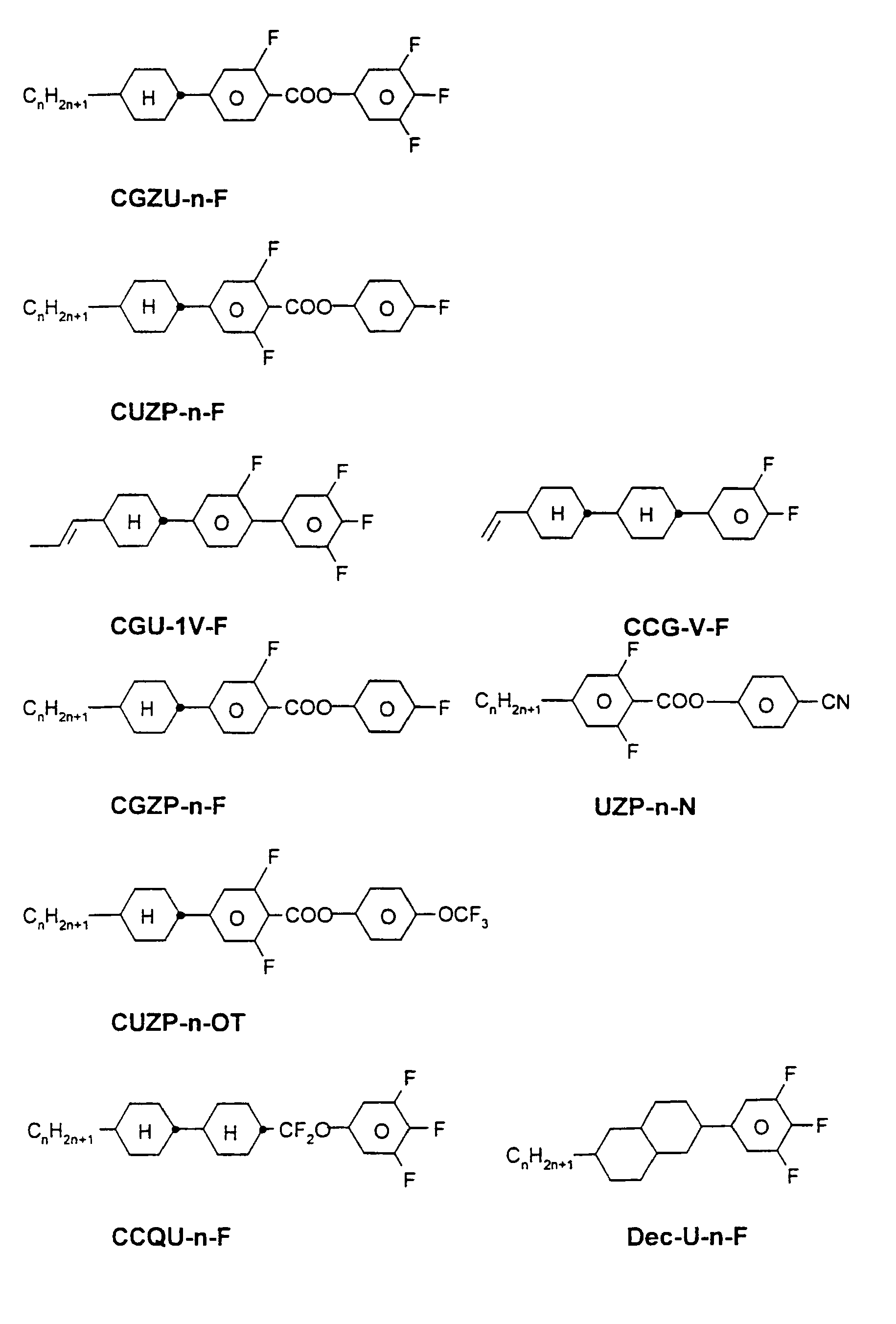

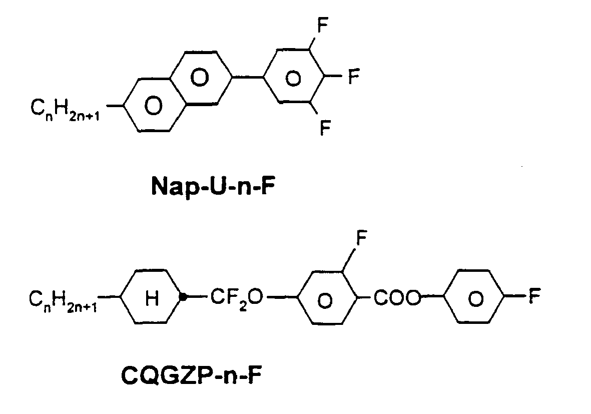

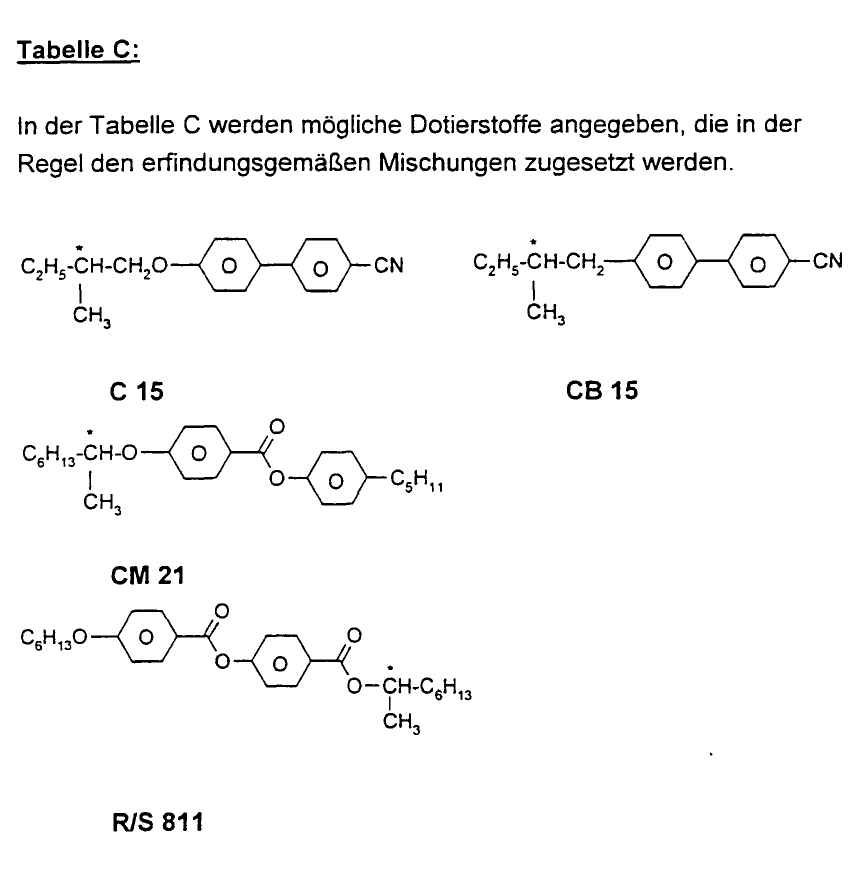

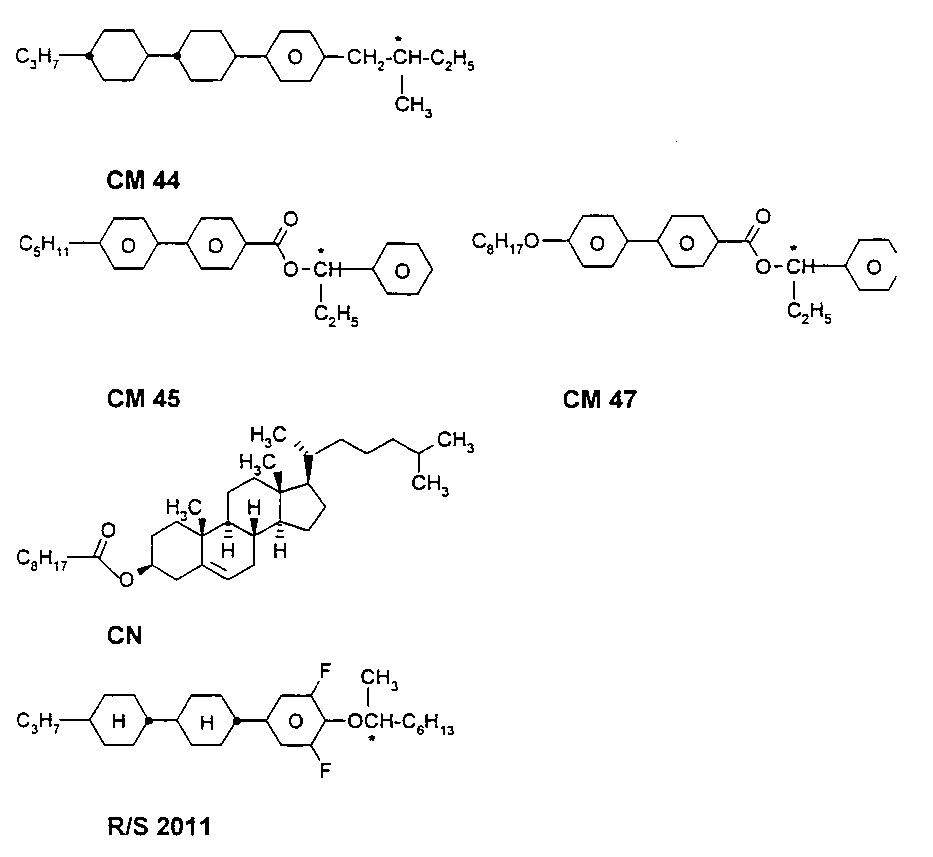

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität (mm2/sec) wurde bei 20 °C bestimmt. Die Rotationsviskosität γ₁ (mPa·s) wurde ebenfalls bei 20 °C bestimmt.

"Übliche Aufarbeitung" bedeutet: man gibt gegebenenfalls Wasser hinzu, extrahiert mit Dichlormethan, Diethylether, Methyl-tert.Butylether oder Toluol, trennt ab, trocknet die organische Phase, dampft ein und reinigt das Produkt durch Destillation unter reduziertem Druck oder Kristallisation und/oder Chromatographie. Folgende Abkürzungen werden verwendet:

| | |
|---|---|
| n-BuLi | 1,6 molare Lösung von n-Butyllithium in n-Hexan |
| DMAP | 4-(Dimethylamino)-pyridin |
| THF | Tetrahydrofuran |
| DCC | N,N'-Dicyclohexylcarbodiimid |

### Beispiel 1

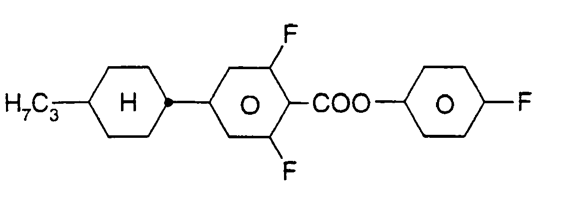

### Schritt 1.1

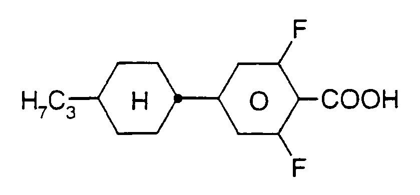

Zu 1,2 mol 4-(trans-4-Propylcyclohexyl)-2,6-difluorbenzol in 3 I THF werden bei -70 °C in einer Stickstoffatmosphäre innerhalb von 1 h 1,32 mol n-Butyllithium (15 % in n-Hexan) zugetropft. Man rührt 1 h nach und gibt bei -70 °C zerschlagenes Trockeneis hinzu und rührt weitere 1,5 h. Nach Zugabe von 3 1 Wasser wird die organische Phase abgetrennt und die wäßrige Phase mit Toluol extrahiert. Die vereinigten organischen Extrakte werden anschließend wie üblich aufgearbeitet.

### Schritt 1.2

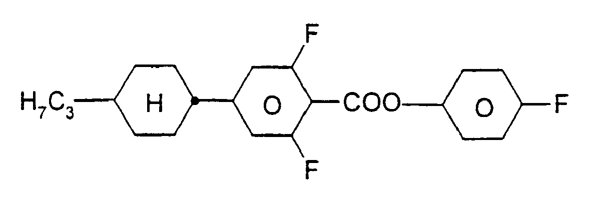

0,1 mol 4-(trans-4-Propylcyclohexyl)-2,6-difluorbenzoesäure, 0,1 mol 4-Fluorphenol, 0,004 mol DMAP werden in 200 ml Toluol vorgelegt und bei 10 °C wird eine Lösung aus 0,11 mol DCC in 50 ml Toluol zugetropft. Das Gemisch läßt man 48 h bei Raumtemperatur rühren und versetzt anschließend mit 0,016 mol Oxalsäuredihydrat. Man läßt 1 h nachrühren und nach Abtrennen der festen Bestandteile wird wie üblich aufgearbeitet.
K 63 N 106,6 I; Δn = +0,113; Δε = +13,72.

Analog werden die folgenden Verbindungen der Formel I 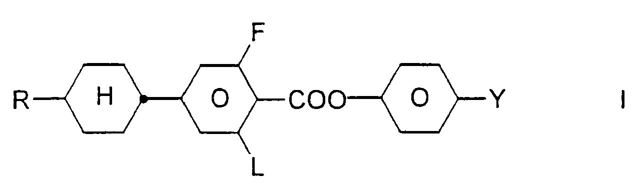 hergestellt:

| R | -(A¹-Z¹)ₘ- | L | Y | |
|---|---|---|---|---|
| CH₃ | 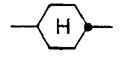 | H | F | |
| CH₃ | 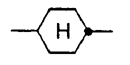 | F | F | |
| C₂H₅ | 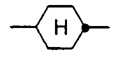 | H | F | |
| C₂H₅ | 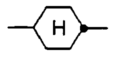 | F | F | K 52 N 72,2 1; |
| | | | | Δε = 12,65; Δn = 0,109 |
| n-C₃H₇ | 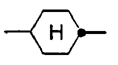 | H | F | |
| n-C₄H₉ | 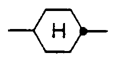 | H | F | |
| n-C₄H₉ | 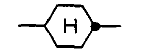 | F | F | |
| n-C₅H₁₁ | 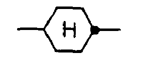 | H | F | |
| n-C₅H₁₁ | 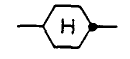 | F | F | K 57 N 111,3 I; |
| | | | | Δε = 11,8; Δn = 0,084 |
| n-C₆H₁₃ | 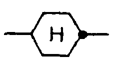 | H | F | |
| n-C₆H₁₃ | 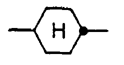 | F | F | |
| CH₂=CH | 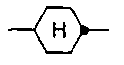 | H | F | |
| CH₂CH | 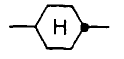 | F | F | |
| CH₂CH | 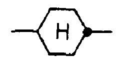 | H | F | |
| CH₃CH=CH | 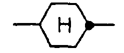 | F | F | |
| CH₂=CHCH₂ | 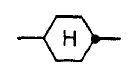 | H | F | |
| CH₂=CHCH₂ | 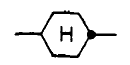 | F | F | |
| CH₂=CHC₂H₄ | 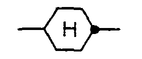 | H | F | |
| CH₂=CHC₂H₄ | 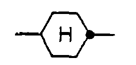 | F | F | |
| CH₃CH=CHCH₂ | 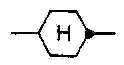 | H | F | |
| CH₃CH=CHCH₂ | 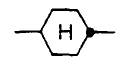 | F | F | |
| CH₃CH=CHC₂H, | 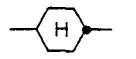 | H | F | |
| CH₃CH=CHC₂H₄ | 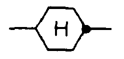 | F | F | |
| C₂H₅O | 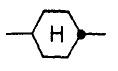 | H | F | |
| C₂H₅O | 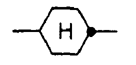 | F | F | |
| CH₃ | 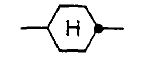 | H | OCF₃ | |
| CH₃ | 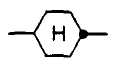 | F | OCF₃ | |
| C₂H₅ | 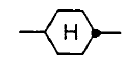 | H | OCF₃ | K 55 S_{A} 77 N 127,9 I; |
| | | | | Δε = 16,38; Δn = 0,127 |
| C₂H₅ | 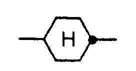 | F | OCF₃ | |
| n-C₃H₇ | 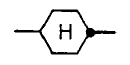 | H | OCF₃ | K 64 S_{A} 100 N 151,4 I; |
| | | | | Δε = 15,97; Δn = 0,136 |
| n-C₃H₇ | 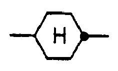 | F | OCF₃ | |
| n-C₄H₉ | 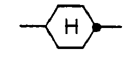 | H | OCF₃ | |
| n-C₄H₉ | 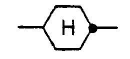 | F | OCF₃ | |
| n-C₅H₁₁ | 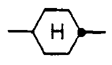 | H | OCF₃ | |
| n-C₅H₁₁ | 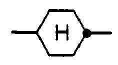 | F | OCF₃ | |
| n-C₆H₁₃ | 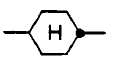 | H | OCF₃ | |
| n-C₆H₁₃ | 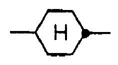 | F | OCF₃ | |
| CH₂=CH | 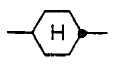 | H | OCF₃ | |
| CH₂CH | 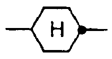 | F | OCF₃ | |
| CH₂CH | 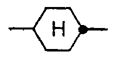 | H | OCF₃ | |
| CH₃CH=CH | 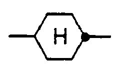 | F | OCF₃ | |
| CH₂=CHCH₂ | 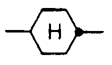 | H | OCF₃ | |
| CH₂=CHCH₂ | 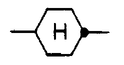 | F | OCF₃ | |
| CH₂=CHC₂H₄ | 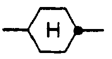 | H | OCF₃ | |
| CH₂=CHC₂H₄ | 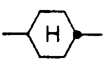 | F | OCF₃ | |
| CH₃CH=CHCH₂ | 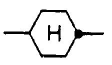 | H | OCF₃ | |
| CH₃CH=CHCH₂ | 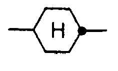 | F | OCF₃ | |
| CH₃CH=CHC₂H₄ | 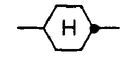 | H | OCF₃ | |
| CH₃CH=CHC₂H₄ | 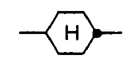 | F | OCF₃ | |
| C₂H₅O | 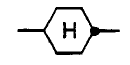 | H | OCF₃ | |
| C₂H₅O | 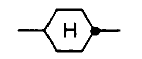 | F | OCF₃ | |
| CH₃ | 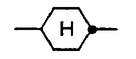 | H | OCHF₂ | |
| CH₃ | 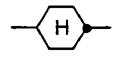 | F | OCHF₂ | |
| C₂H₅ | 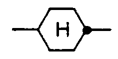 | H | OCHF₂ | |
| C₂H₅ | 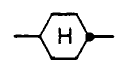 | F | OCHF₂ | |
| n-C₃H₇ | 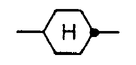 | H | OCHF₂ | |
| n-C₄H₉ | 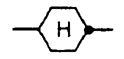 | H | OCHF₂ | |
| n-C₄H₉ | 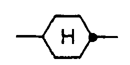 | F | OCHF₂ | |
| n-C₅H₁₁ | 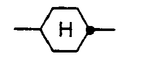 | H | OCHF₂ | |
| n-C₅H₁₁ | 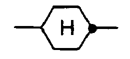 | F | OCHF₂ | |
| n-C₆H₁₃ | 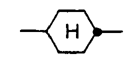 | H | OCHF₂ | |
| n-C₆H₁₃ | 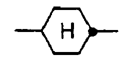 | F | OCHF₂ | |
| CH₂=CH | 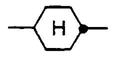 | H | OCHF₂ | |
| CH₂CH | 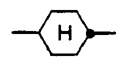 | F | OCHF₂ | |
| CH₂CH | 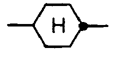 | H | OCHF₂ | |
| CH₃CH=CH | 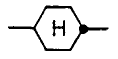 | F | OCHF₂ | |
| CH₂=CHCH₂ | 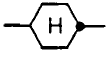 | H | OCHF₂ | |
| CH₂=CHCH₂ | 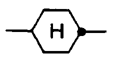 | F | OCHF₂ | |
| CH₂=CHC₂H₄ | 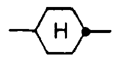 | H | OCHF₂ | |
| CH₂=CHC₂H₄ | 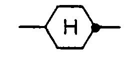 | F | OCHF₂ | |
| CH₃CH=CHCH₂ | 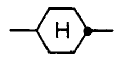 | H | OCHF₂ | |
| CH₃CH=CHCH₂ | 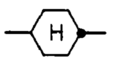 | F | OCHF₂ | |
| CH₃CH=CHC₂H₄ | 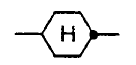 | H | OCHF₂ | |
| CH₃CH=CHC₂H₄ | 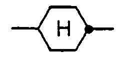 | F | OCHF₂ | |
| C₂H₅O | 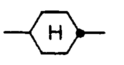 | H | OCHF₂ | |
| C₂H₅O | 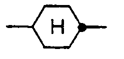 | F | OCHF₂ | |
| n-C₃H₇ | 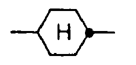 | F | OCHFCF₃ | |
| n-C₃H₇ | 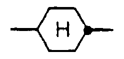 | F | OCF₂CHFCF₃ | |
| CH₃CH₂OCH₂ | 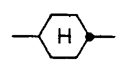 | H | CF₃ | |
| n-C₅H₁₁ | 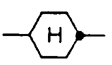 | F | CN | |
| n-C₅H₁₁ | 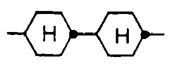 | H | OCF₃ | |
| n-C₅H₁₁ | 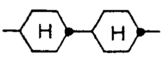 | F | F | |

### Mischunqsbeispiele

### Beispiel M1

| | | |
|---|---|---|
| CCH-34 | 5,00 % | S → N [°C]: < -40,0 |
| CC-3-V1 | 4,00 % | Klärpunkt [°C]: +70,5 |
| CCP-2F.F.F | 11,00 % | Δn [589 nm, 20 °C]:+0,0901 |
| CCP-3F.F.F | 10,00 % | γ₁ [20 °C; mPa·s]: 151 |
| CCP-30CF₃ | 1,00 % | |
| CGU-2-F | 11,00 % | |
| CGU-3-F | 11,00 % | |
| CGU-5-F | 6,00 % | |
| CCZU-2-F | 5,00 % | |
| CCZU-3-F | 15,00 % | |
| CCZU-5-F | 5,00 % | |
| CGZP-2-OT | 10,00 % | |
| CGZP-3-OT | 6,00 % | |

### Beispiel M2

| | | |
|---|---|---|
| CC-3-V1 | 3,00 % | S → N [°C]:< -40,0 |
| CCH-34 | 6,00 % | Klärpunkt [°C]: +70,0 |
| CCP-2F.F.F | 11,00 % | Δn [589 nm, 20 °C]: +0,0904 |
| CCP-3F.F.F | 12,00 % | γ₁ [20 °C; mPa·s]: 149 |
| CGU-2-F | 11,00 % | |
| CGU-3-F | 11,00 % | |
| CGU-5-F | 5,00 % | |
| CCZU-2-F | 5,00 % | |
| CCZU-3-F | 15,00 % | |
| CCZU-5-F | 3,00 % | |
| CGZP-2-OT | 10,00 % | |
| CGZP-3-OT | 8,00 % | |

### Beispiel M3

| | | |
|---|---|---|
| CC-3-V1 | 5,00 % | S → N [°C]: < -40,0 |
| CCH-34 | 6,00 % | Klärpunkt [°C]: +70,5 |
| CCP-2F.F.F | 10,00 % | Δn [589 nm, 20 °C]: +0,0910 |
| CCP-3F.F.F | 10,00 % | Δε [1 kHz: 20 °C]: 4,8 |
| CGU-2-F | 11,00 % | γ₁ [20 °C; mPa·s]: 145 |
| CGU-3-F | 11,00 % | |
| CGU-5-F | 6,00 % | |
| CCZU-2-F | 5,00 % | |
| CCZU-3-F | 15,00 % | |
| CCZU-5-F | 3,00 % | |
| CGZP-2-OT | 10,00 % | |
| CGZP-3-OT | 8,00 % | |

### Beispiel M4

| | | |
|---|---|---|
| CC-3-V1 | 5,00 % | S → N [°C]: < -40,0 |
| CCH-34 | 6,00 % | Klärpunkt [°C]: +71,0 |
| CCP-2F.F.F | 10,00 % | Δn [589 nm, 20 °C]: +0,0905 |
| CCP-3F.F.F | 9,50 % | Δε [1 kHz: 20 °C]: 4,8 |
| CCP-20CF₃ | 1,00 % | γ₁ [20 °C; mPa·s]: 144 |
| CGU-2-F | 11,00 % | |
| CGU-3-F | 11,00 % | |
| CGU-5-F | 5,50 % | |
| CCZU-2-F | 5,00 % | |
| CCZU-3-F | 15,00 % | |
| CCZU-5-F | 3,00 % | |
| CGZP-2-OT | 11,00 % | |
| CGZP-3-OT | 7,00 % | |

### Beispiel M5

| | |
|---|---|
| CC-3-V1 | 5,00 % |
| CCH-34 | 6,00 % |
| CCP-2F.F.F | 11,00 % |
| CCP-3F.F.F | 9,00 % |
| CCP-20CF₃ | 1,00 % |
| CGU-2-F | 11,00 % |
| CGU-3-F | 11,00 % |
| CGU-5-F | 5,00 % |
| CCZU-2-F | 5,00 % |
| CCZU-3-F | 15,00 % |
| CCZU-5-F | 3,00 % |
| CGZP-2-OT | 11,00 % |
| CGZP-3-OT | 7,00 % |

### Beispiel M6

| | |
|---|---|
| CC-3-V1 | 7,00 % |
| CCH-34 | 6,00 % |
| CCP-2F.F.F | 11,00 % |
| CCP-3F.F.F | 7,00 % |
| CGU-2-F | 11,00 % |
| CGU-3-F | 11,00 % |
| CGU-5-F | 5,00 % |
| CCZU-2-F | 5,00 % |
| CCZU-3-F | 15,00 % |
| CCZU-5-F | 3,00 % |
| CGZP-2-OT | 11,00 % |
| CGZP-3-OT | 8,00 % |

### Beispiel M7

| | | |
|---|---|---|
| CC-3-V1 | 5,00 % | |
| CCH-34 | 6,00 % | Klärpunkt [°C]: +71,0 |
| CCP-2F.F.F | 10,50 % | Δn [589 nm, 20 °C]: +0,0904 |
| CCP-3F.F.F | 9,50 % | |
| CGU-2-F | 11,00 % | |
| CGU-3-F | 11,00 % | |
| CGU-5-F | 5,00 % | |
| CCZU-2-F | 5,00 % | |
| CCZU-3-F | 15,00 % | |
| CCZU-5-F | 4,00 % | |
| CGZP-2-OT | 11,00 % | |
| CGZP-3-OT | 7,00 % | |

### Beispiel M8

| | | |
|---|---|---|
| CC-3-V1 | 5,00 % | |
| CCH-34 | 6,00 % | Klärpunkt [°C]: +71,0 |
| CCP-2F.F.F | 9,00 % | Δn [589 nm, 20 °C]: +0,0908 |
| CCP-3F.F.F | 11,00 % | |
| CGU-2-F | 11,00 % | |
| CGU-3-F | 11,00 % | |
| CGU-5-F | 6,00 % | |
| CCZU-2-F | 5,00 % | |
| CCZU-3-F | 15,00 % | |
| CCZU-5-F | 3,00 % | |
| CGZP-2-OT | 11,00 % | |
| CGZP-3-OT | 7,00 % | |

### Beispiel M9

| | | |
|---|---|---|
| CC-3-V1 | 3,00 % | S → N [°C]: < -40,0 |
| CCP-2F.F.F | 10,00 % | Klärpunkt [°C]: +71,5 |
| CCP-3F.F.F | 10,00 % | Δn [589 nm, 20 °C]: +0,0908 |
| CCP-20CF₃.F | 8,00 % | γ₁ [20 °C; mPa·s]: 167 |
| CCP-40CF₃ | 5,00 % | |
| CGU-2-F | 11,00 % | |
| CGU-3-F | 11,00 % | |
| CGU-5-F | 7,00 % | |
| CCZU-2-F | 5,00 % | |
| CCZU-3-F | 15,00 % | |
| CCZU-5-F | 5,00 % | |
| CGZP-2-OT | 5,00 % | |
| CGZP-3-OT | 5,00 % | |

### Beispiel M10

| | | |
|---|---|---|
| BCH-32 | 3,00 % | S → N [°C]: < -40,0 |
| CC-3-V1 | 3,00 % | Klärpunkt [°C]: +70,0 |
| CCP-2F.F.F | 6,00 % | Δn [589 nm, 20 °C]: +0,1046 |
| CCP-30CF₃ | 5,00 % | γ₁ [20 °C; mPa·s]: 173 |
| CGU-2-F | 11,00 % | |
| CGU-3-F | 10,00 % | |
| CGU-5-F | 6,00 % | |
| CCZU-2-F | 5,00 % | |
| CCZU-3-F | 15,00 % | |
| CCZU-5-F | 5,00 % | |
| BCH-3F.F.F | 13,00 % | |
| BCH-5F.F.F | 9,00 % | |
| CGZP-2-OT | 2,00 % | |
| CGZP-3-OT | 7,00 % | |

### Beispiel M11

| | | |
|---|---|---|
| CC-3-V1 | 3,00 % | S → N [°C]: < -40,0 |
| CCP-2F.F.F | 10,00 % | Klärpunkt [°C]: +70,5 |
| CCP-3F.F.F | 11,00 % | Δn [589 nm, 20 °C]: +0,0902 |
| CCP-20CF₃.F | 8,00 % | γ₁ [20 °C; mPa·s]: 166 |
| CCP-40CF₃ | 4,00 % | |
| CGU-2-F | 11,00 % | |
| CGU-3-F | 11,00 % | |
| CGU-5-F | 7,00 % | |
| CCZU-2-F | 5,00 % | |
| CCZU-3-F | 15,00 % | |
| CCZU-5-F | 5,00 % | |
| CGZP-2-OT | 6,00 % | |
| CGZP-3-OT | 4,00 % | |

### Beispiel M12

| | | |
|---|---|---|
| BCH-32 | 3,00 % | S → N [°C]: < -40,0 |
| CC-3-V1 | 3,00 % | Klärpunkt [°C]: +70,5 |
| CCP-2F.F.F | 5,00 % | Δn [589 nm, 20 °C]: +0,1050 |
| CCP-30CF₃ | 5,00 % | γ₁ [20 °C; mPa·s]: 174 |
| CGU-2-F | 10,00 % | |
| CGU-3-F | 11,00 % | |
| CGU-5-F | 6,00 % | |
| CCZU-2-F | 5,00 % | |
| CCZU-3-F | 15,00 % | |
| CCZU-5-F | 5,00 % | |
| BCH-3F.F.F | 13,00 % | |
| BCH-5F.F.F | 10,00 % | |
| CGZP-2-OT | 3,00 % | |
| CGZP-3-OT | 6,00 % | |

### Beispiel M13

| | | |
|---|---|---|
| CCH-34 | 6,00 % | S → N [°C]: < -40,0 |
| CC-3-V1 | 2,00 % | Klärpunkt [°C]: +70,0 |
| CCP-2F.F.F | 11,00 % | Δn [589 nm, 20 °C]: +0,0895 |
| CCP-3F.F.F | 12,00 % | |
| CCP-20CF₃ | 1,00 % | |
| CGU-2-F | 11,00 % | |
| CGU-3-F | 5,00 % | |
| CGU-5-F | 5,00 % | |
| CCZU-2-F | 15,00 % | |
| CCZU-3-F | 5,00 % | |
| CCZU-5-F | 10,00 % | |
| CGZP-2-OT | 6,00 % | |
| CGZP-3-OT | | |

### Beispiel M14

| | | |
|---|---|---|
| CC-3-V1 | 4,00 % | S → N [°C]: < -40,0 |
| CCH-34 | 3,00 % | Klärpunkt [°C]: +70,5 |
| CCP-2F.F.F | 10,00 % | Δn [589 nm, 20 °C]: +0,0909 |
| CCP-3F.F.F | 7,00 % | γ₁ [20 °C; mPa·s]: 147 |
| CCP-30CF₃ | 5,00 % | Verdrillung: 90° |
| CGU-2-F | 11,00 % | d · Δn [µm]: 0,50 |
| CGU-3-F | 11,00 % | V_{(10,0,20)}[V]: 1,00 |
| CGU-5-F | 2,00 % | |
| CCZU-2-F | 5,00 % | |
| CCZU-3-F | 15,00 % | |
| CCZU-5-F | 3,00 % | |
| CUZP-2-OT | 13,00 % | |
| CUZP-3-OT | 11,00 % | |

### Beispiel M 15

| | | |
|---|---|---|
| CC-3-V1 | 4,00 % | S → N [°C]: < -40,0 |
| CCH-34 | 4,00 % | Klärpunkt [°C]: +71,0 |
| CCP-2F.F.F | 10,00 % | Δn [589 nm, 20 °C]: +0,0920 |
| CCP-3F.F.F | 4,00 % | Verdrillung: 90° |
| BCH-2F.F.F | 3,00 % | d · Δn [µm]: 0,50 |
| CCP-20CF₃ | 4,00 % | V_{(10,0,20)}[V]: 1,00 |
| CGU-2-F | 10,00 % | |
| CGU-3-F | 10,00 % | |
| CGU-5-F | 2,00 % | |
| CCZU-2-F | 5,00 % | |
| CCZU-3-F | 15,00 % | |
| CCZU-5-F | 3,00 % | |
| CUZP-2-OT | 10,00 % | |
| CUZP-3-OT | 8,00 % | |
| CUZP-5-OT | 8,00 % | |

### Beispiel M 16

| | | |
|---|---|---|
| CC-3-V1 | 2,00 % | S → N [°C]: < -40,0 |
| CCH-34 | 5,00 % | Klärpunkt [°C]: +70,5 |
| CCP-2F.F.F | 9,00 % | Δn [589 nm, 20 °C]: +0,0900 |
| CCP-3F.F.F | 9,00 % | γ₁ [20 °C; mPa·s]: 148 |
| CCP-30CF₃ | 4,00 % | Verdrillung: 90° |
| CGU-2-F | 11,00 % | d · Δn [µm]: 0,50 |
| CGU-3-F | 11,00 % | V_{(10,0,20)}[V]: 0,98 |
| CGU-5-F | 2,00 % | |
| CCZU-2-F | 5,00 % | |
| CCZU-3-F | 15,00 % | |
| CCZU-5-F | 4,00 % | |
| CUZP-2-OT | 12,00 % | |
| CUZP-3-OT | 11,00 % | |

### Beispiel M17

| | | |
|---|---|---|
| CCH-34 | 5,00 % | S → N [°C]: < -40,0 |
| CCP-2F.F.F | 11,00 % | Klärpunkt [°C]: +72,0 |
| CCP-3F.F.F | 11,00 % | Δn [589 nm, 20 °C]: +0,0954 |
| CCP-20CF₃.F | 10,00 % | γ₁ [20 °C; mPa·s]: 154 |
| CCP-30CF₃ | 5,00 % | Verdrillung: 90° |
| CCP-40CF₃ | 5,00 % | d · Δn [µm]: 0,50 |
| CGU-2-F | 10,00 % | V_{(10,0,20)}[V]: 1,09 |
| CGU-3-F | 10,00 % | |
| CGU-5-F | 4,00 % | |
| CPZG-2-OT | 2,00 % | |
| CPZG-3-OT | 4,00 % | |
| CUZP-2-OT | 12,00 % | |
| CUZP-3-OT | 10,00 % | |
| CBC-33 | 1,00 % | |

### Beispiel M 18

| | | |
|---|---|---|
| CCP-2F.F.F | 10,00 % | S → N [°C]: < -40,0 |
| CCP-3F.F.F | 11,00 % | Klärpunkt [°C]: +70,5 |
| BCH-3F.F.F | 5,00 % | Δn [589 nm, 20 °C]: +0,0944 |
| CCP-30CF₃ | 9,00 % | γ₁ [20 °C; mPa·s]: 169 |
| CGU-2-F | 10,00 % | Verdrillung: 90° |
| CGU-3-F | 10,00 % | d · Δn [µm]: 0,50 |
| CGU-5-F | 3,00 % | V_{(10,0,20)}[V]: 0,98 |
| CCZU-2-F | 4,00 % | |
| CCZU-3-F | 14,00 % | |
| CCZU-5-F | 2,00 % | |
| CUZP-2-OT | 12,00 % | |
| CUZP-3-OT | 10,00 % | |

### Beispiel M 19

| | | |
|---|---|---|
| CCH-34 | 2,00 % | S → N [°C]: < -40,0 |
| CCP-2F.F.F | 10,00 % | Klärpunkt [°C]: +72,0 |
| CCP-3F.F.F | 12,00 % | Δn [589 nm, 20 °C]: +0,0908 |
| CCP-20CF₃ | 5,00 % | γ₁ [20 °C; mPa·s]: 162 |
| CCP-30CF₃ | 3,00 % | Verdrillung: 90° |
| CGU-2-F | 10,00 % | d · Δn [µm]: 0,50 |
| CGU-2-F | 11,00 % | V_{(10,0,20)}[V]: 0,95 |
| CCZU-2-F | 5,00 % | |
| CCZU-3-F | 15,00 % | |
| CCZU-5-F | 3,00 % | |
| CUZP-2-OT | 13,00 % | |
| CUZP-3-OT | 11,00 % | |

### Beispiel M20

| | | |
|---|---|---|
| CC-3-VI | 4,00 % | S → N [°C]: < -40,0 |
| CCP-2F.F.F | 11,00 % | Klärpunkt [°C]: +70,0 |
| CCP-3F.F.F | 11,00 % | Δn [589 nm, 20 °C]: +0,0900 |
| CCP-20CF₃ | 6,00 % | γ₁ [20 °C; mPa·s]: 154 |
| CGU-2-F | 10,00 % | Verdrillung: 90° |
| CGU-3-F | 11,00 % | d · Δn [µm]: 0,50 |
| CCZU-2-F | 5,00 % | V_{(10,0,20)}[V]: 0,96 |
| CCZU-3-F | 15,00 % | |
| CCZU-5-F | 3,00 % | |
| CUZP-2-OT | 13,00 % | |
| CUZP-3-OT | 11,00 % | |

### Beispiel M21

| | | |
|---|---|---|
| CCH-34 | 3,00 % | S → N [°C]: < -40,0 |
| CCP-2F.F.F | 11,00 % | Klärpunkt [°C]: +70,5 |
| CCP-3F.F.F | 12,00 % | Δn [589 nm, 20 °C]: +0,0900 |
| CCP-20CF₃ | 5,00 % | γ₁ [20 °C; mPa·s]: 154 |
| CCP-30CF₃ | 4,00 % | Verdrillung: 90° |
| CGU-2-F | 11,00 % | d · Δn [µm]: 0,50 |
| CGU-3-F | 10,00 % | V_{(10,0,20)}[V]: 0,97 |
| CCZU-2-F | 5,00 % | |
| CCZU-3-F | 15,00 % | |
| CUZP-2-OT | 13,00 % | |
| CUZP-3-OT | 11,00 % | |

### Beispiel M22

| | | |
|---|---|---|
| CC-3-V1 | 5,00 % | S → N [°C]: < -40,0 |
| CCP-2F.F.F | 10,00 % | Klärpunkt [°C]: +70,0 |
| CCP-3F.F.F | 12,00 % | Δn [589 nm, 20 °C]: +0,0892 |
| CCP-30CF₃ | 9,00 % | γ₁ [20 °C; mPa·s]: 154 |
| CGU-2-F | 11,00 % | Verdrillung: 90° |
| CGU-3-F | 11,00 % | d · Δn [µm]: 0,50 |
| CGU-5-F | 3,00 % | V_{(10,0.20)}[V]: 0,99 |
| CCZU-2-F | 5,00 % | |
| CCZU-3-F | 15,00 % | |
| CCZU-5-F | 4,00 % | |
| CUZP-2-F | 11,00 % | |
| CUZP-3-F | 4,00 % | |

### Beispiel M23

| | | |
|---|---|---|
| CCH-34 | 5,00 % | S → N [°C]: < -40,0 |
| CCP-2F.F.F | 11,00 % | Klärpunkt [°C]: +69,0 |
| CCP-3F.F.F | 11,00 % | Δn [589 nm, 20 °C]: +0,0958 |
| CCP-20CF₃.F | 6,00 % | γ₁ [20 °C; mPa·s]: 159 |
| CCP-30CF₃ | 6,00 % | Verdrillung: 90° |
| CCP-40CF₃ | 5,00 % | d · Δn [µm]: 0,50 |
| CGU-2-F | 11,00 % | V_{(10,0,20)}[V]: 0,96 |
| CGU-3-F | 11,00 % | |
| CGU-5-F | 5,00 % | |
| CPZG-2-OT | 3,00 % | |
| CPZG-3-OT | 5,00 % | |
| CUZP-2-F | 10,00 % | |
| CUZP-3-F | 10,00 % | |
| CBC-33 | 1,00 % | |

### Beispiel M24

| | | |
|---|---|---|
| BCH-32 | 3,00 % | S → N [°C]: < -40,0 |
| CCP-2F.F.F | 11,00 % | Klärpunkt [°C]: +65,0 |
| CCP-3F.F.F | 9,00 % | Δn [589 nm, 20 °C]: +0,0940 |
| BCH-3F.F.F | 6,00 % | Verdrillung: 90° |
| CCP-30CF₃ | 7,00 % | d · Δn [µm]: 0,50 |
| CGU-2-F | 11,00 % | V_{(10,0,20)}[V]: 0,96 |
| CGU-3-F | 11,00 % | |
| CGU-5-F | 7,00 % | |
| CCZU-2-F | 5,00 % | |
| CCZU-3-F | 15,00 % | |
| CCZU-5-F | 5,00 % | |
| CUZP-2-F | 10,00 % | |

### Beispiel M25

| | | |
|---|---|---|
| BCH-32 | 5,00 % | S → N [°C]: < -40,0 |
| CCP-2F.F.F | 11,00 % | Klärpunkt [°C]: +70,0 |
| CCP-3F.F.F | 11,00 % | Δn [589 nm, 20 °C]: +0,0946 |
| BCH-3F.F.F | 3,00 % | Verdrillung: 90° |
| CCP-30CF₃ | 8,00 % | d · Δn [µm]: 0,50 |
| CGU-2-F | 11,00 % | V_{(10.0.20)}[V]: 1,00 |
| CGU-3-F | 11,00 % | |
| CGU-5-F | 5,00 % | |
| CCZU-2-F | 5,00 % | |
| CCZU-3-F | 15,00 % | |
| CCZU-5-F | 5,00 % | |
| CUZP-2-F | 10,00 % | |

### Beispiel M26

| | | |
|---|---|---|
| CCH-34 | 2,00 % | S → N [°C]: < -40,0 |
| BCH-32 | 2,00 % | Klärpunkt [°C]: +71,5 |
| CCP-2F.F.F | 10,00 % | Δn [589 nm, 20 °C]: +0,0907 |
| CCP-3F.F.F | 12,00 % | γ₁ [20 °C; mPa·s]: 166 |
| CCP-30CF₃ | 9,00 % | Verdrillung: 90° |
| CGU-2-F | 11,00 % | d · Δn [µm]: 0,50 |
| CGU-3-F | 11,00 % | V_{(10,0,20)}[V]: 0,99 |
| CGU-5-F | 3,00 % | |
| CCZU-2-F | 5,00 % | |
| CCZU-3-F | 15,00 % | |
| CCZU-5-F | 5,00 % | |
| CUZP-2-F | 11,00 % | |
| CUZP-3-F | 4,00 % | |

### Beispiel M27

| | |
|---|---|
| CCH-34 | 3,00 % |
| BCH-32 | 2,00 % |
| CCP-2F.F.F | 11,00 % |
| CCP-3F.F.F | 12,00 % |
| CCP-30CF₃ | 9,00 % |
| CGU-2-F | 11,00 % |
| CGU-3-F | 11,00 % |
| CGU-5-F | 3,00 % |
| CCZU-2-F | 5,00 % |
| CCZU-3-F | 15,00 % |
| CCZU-5-F | 3,00 % |
| CUZP-2-F | 11,00 % |
| CUZP-3-F | 4,00 % |

## Patentansprüche

1. Flüssigkristallines Medium, **dadurch gekennzeichnet, dass** es mindestens einen Phenolester der Formel I, 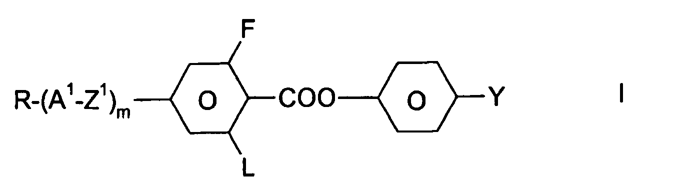 worin
R einen unsubstituierten, einen einfach durch CN oder CF₃ oder mindestens einfach durch Halogen substituierten Alkyl- oder Alkenylrest mit bis zu 15 C-Atomen steht, wobei in diesen Resten auch eine oder mehrere CH₂-Gruppen durch -O-, -S-, -C≡C-, -OC-O-, oder
-O-CO- so ersetzt sein können, daß O-Atome nicht direkt miteinander verknüpft sind,
A¹
a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]octylen-, einen Naphthalin-2,6-diyl, Decahydronaphthalin-2,6-diyl, und 1,2,3,4-Tetrahydronaphthalin-2,6-diyl
wobei die Reste a), b) und c) ein oder mehrfach durch Halogenatome substituiert sein können,
Z¹ -CO-O-, -O-CO-, -CF₂O-, -OCF₂-, -CH₂O-, -OCH₂-, -CH₂CH₂-, -C₂F₄-, -CH=CH-, -C≡C- oder eine Einfachbindung,
Y F, Cl, CN oder ein einfach oder mehrfach halogenierter Alkyl- , Alkenyl-, Alkenyloxy- oder Alkoxyrest mit 1 bis 5 C-Atomen,
L H oder F, und
m 0, 1 oder 2
bedeutet,
und
eine oder mehrere Verbindungen ausgewählt aus der Gruppe bestehend aus den allgemeinen Formeln II, III, IV, V, VI, VII, VIII und IX, 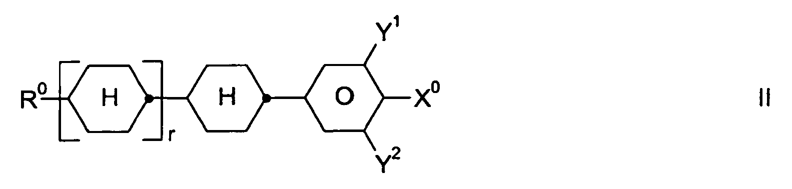 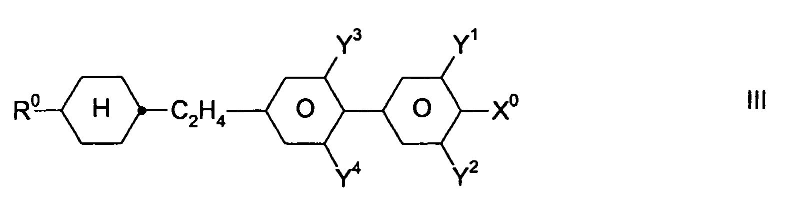 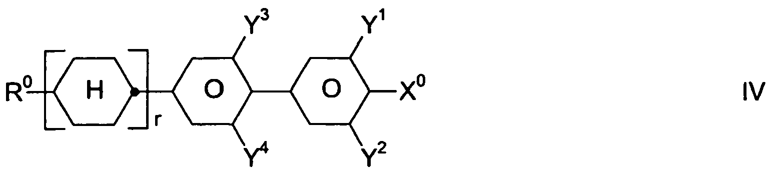 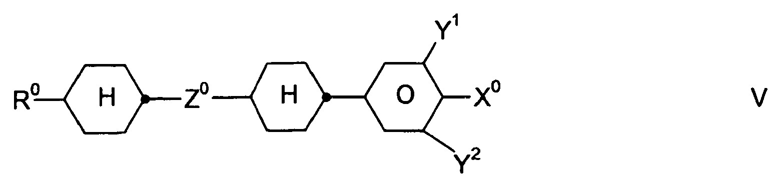 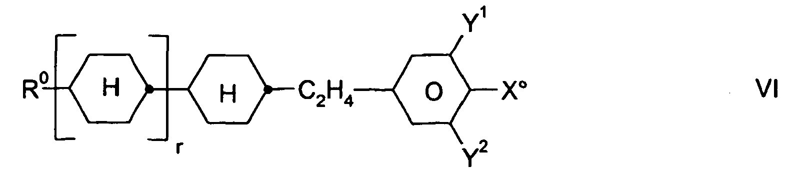 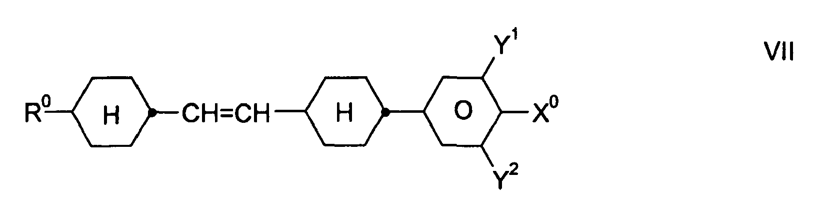 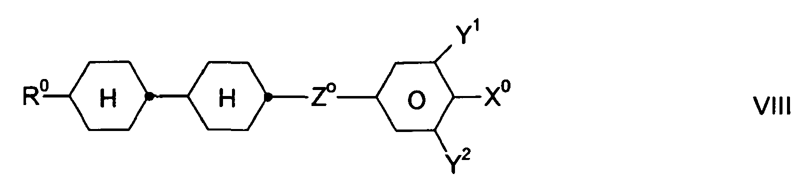 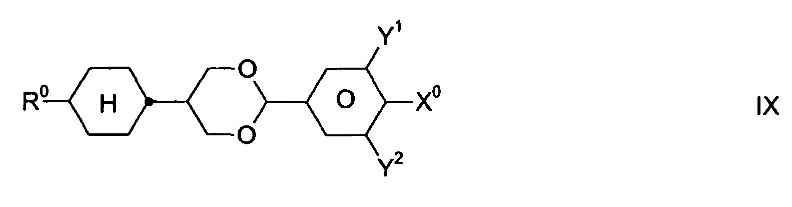 worin
R⁰: n-Alkyl, Oxaalkyl, Fluoralkyl, Alkenyloxy oder Alkenyl mit jeweils bis zu 9 C-Atomen
X⁰: F, Cl, halogeniertes Alkyl, Alkenyl oder Alkoxy mit 1 bis 6 C-Atomen,
Z⁰ -C₂H₄-, -C₂F₄-, -CF₂O-, -OCF₂- oder -COO-,
Y¹,Y², Y³ und Y⁴ jeweils unabhängig voneinander H oder F,
r: 0 oder 1.
bedeutet,
enthält.

2. Flüssigkristallines Medium nach Anspruch 1, **dadurch gekennzeichnet, daß** R ein geradkettiger Alkylrest mit 1 bis 10 C-Atomen oder ein Alkenylrest mit 2 bis 10 C-Atomen bedeutet.

3. Flüssigkristallines Medium nach Anspruch 1 oder 2, **dadurch gekennzeichnet, daß**
Y F, Cl, CN, CF₃, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCF₂CF₂CF₃, OCF₂CHFCF₃ oder OCCIFCF₂CF₃
bedeutet.

4. Flüssigkristallines Medium nach einem der Ansprüche 1 bis 3, **dadurch gekennzeichnet, daß** m = 1 bedeutet.

5. Flüssigkristallines Medium nach einem der Ansprüche 1 bis 4, **dadurch gekennzeichnet, dass** es Phenolester der Teilformeln I1 bis I12: 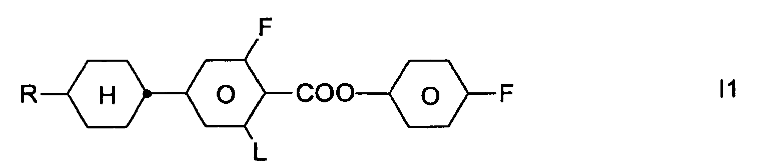 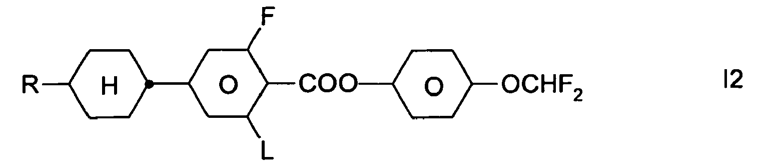 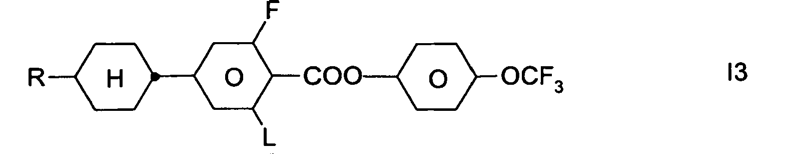 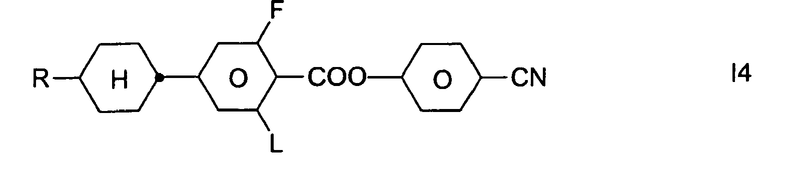 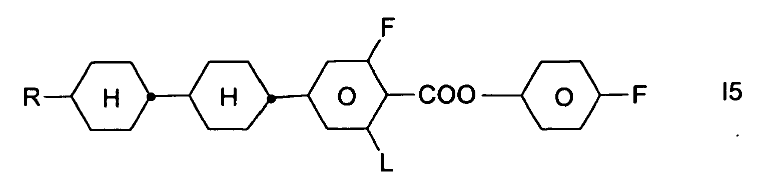 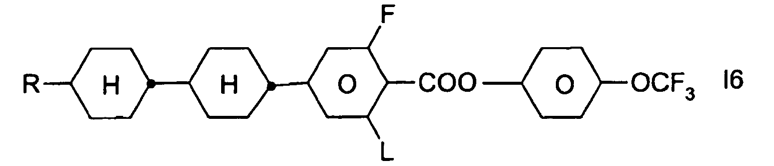 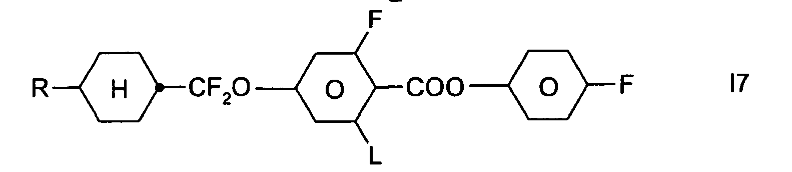 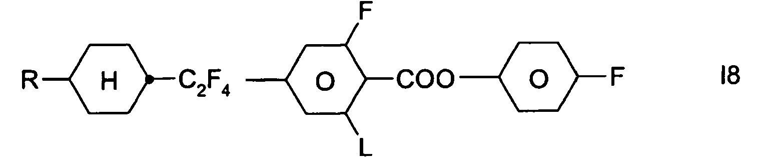 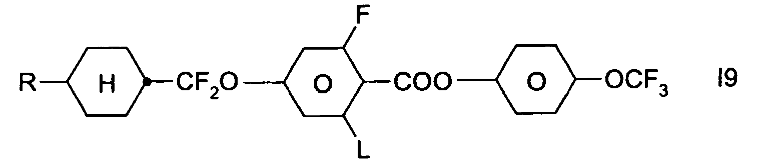 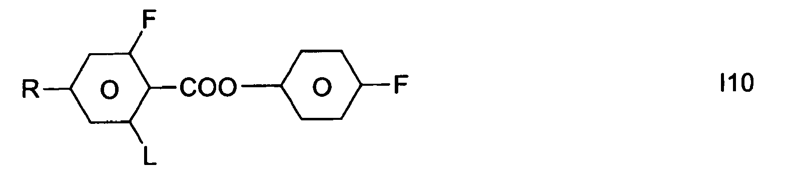 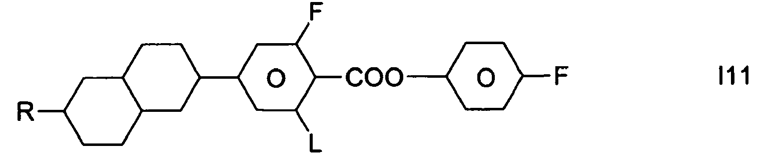 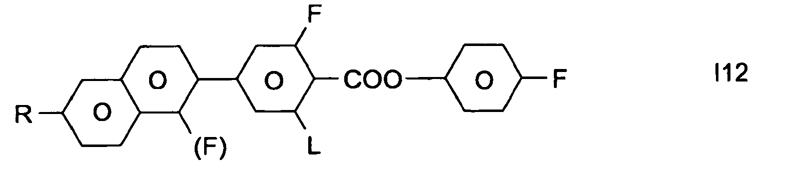 worin
R und L die in Anspruch 1 gegebene Bedeutung haben,
enthält.

6. Medium nach einem der Ansprüche 1 bis 5, **dadurch gekennzeichnet, daß** der Anteil an Verbindungen der Formel I bis IX im Gesamtgemisch mindestens 50 Gew.-% beträgt.

7. Flüssigkristallines Medium nach einem der Ansprüche 1 bis 6, **dadurch gekennzeichnet, daß** es zusätzlich eine oder mehrere Verbindungen der Formeln RI bis RVI 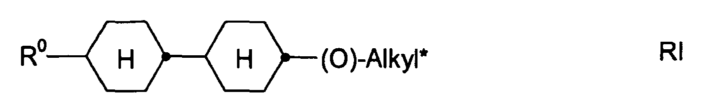 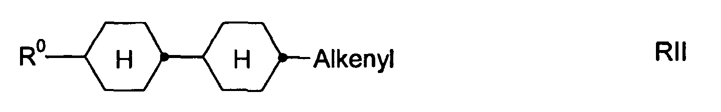 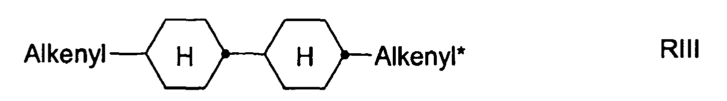 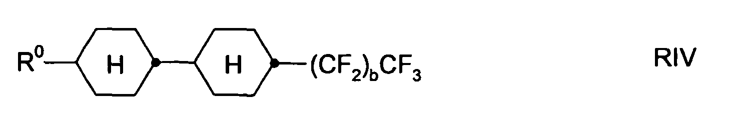 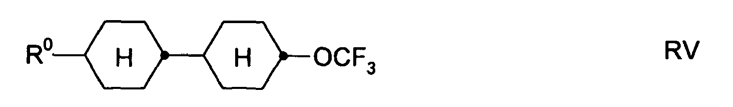 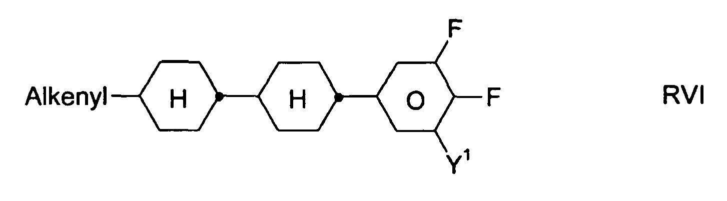 worin 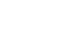
R⁰ n-Alkyl, Oxaalkyl, Fluoralkyl, Alkenyloxy oder Alkenyl mit jeweils bis zu 9 C-Atomen,
b 0, 1 oder 2,
Y¹ H oder F,
Alkyl* geradkettiger Alkylrest mit bis zu 9 C-Atomen,
Alkenyl oder Alkenyl* jeweils unabhängig voneinander ein Alkenylrest mit bis zu 9 C-Atomen
bedeuten,
enthält.

8. Flüssigkristallines Medium nach einem der Ansprüche 1 bis 7, **dadurch gekennzeichnet, daß** X⁰ F oder OCF₃ und Y² H oder F bedeuten.

9. Verwendung des flüssigkristallinen Mediums nach einem der Ansprüche 1 bis 8 für elektrooptische Zwecke.

10. Elektrooptische Flüssigkristallanzeige enthaltend ein flüssigkristallines Medium nach einem der Ansprüche 1 bis 8.

## Claims

1. Liquid-crystalline medium, **characterized in that** it comprises at least one phenol ester of the formula I 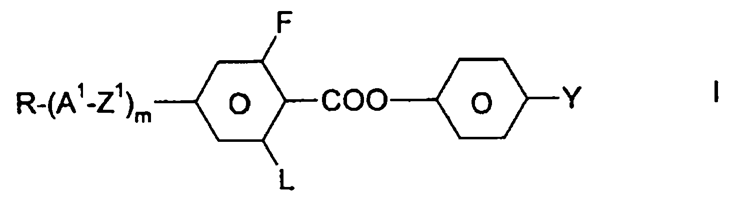 in which
R is an alkyl or alkenyl radical having up to 15 carbon atoms which is unsubstituted, monosubstituted by CN or CF₃ or at least monosubstituted by halogen, where one or more CH₂ groups in these radicals may also be replaced by -O-, -S-,-C≡C-, -OC-O- or -O-CO- in such a way that O atoms are not linked directly to one another,
A¹
a) is a 1,4-cyclohexenylene or 1,4-cyclohexylene radical, in which one or two non-adjacent CH₂ groups may be replaced by -O- or ―S-,
b) is a 1,4-phenylene radical, in which one or two CH groups may be replaced by N,
c) is one radical from the group of piperidine-1,4-diyl, 1,4-bicyclo[2.2.2]octylene, naphthalene-2,6-diyl, decahydronaphthalene-2,6-diyl and 1,2,3,4-tetrahydronaphthalene-2,6-diyl,
where the radicals a), b) and c) may be monosubstituted or polysubstituted by halogen atoms,
Z¹ is ―CO-O-, -O-CO-, -CF₂O-, -OCF₂-, -CH₂O-, -OCH₂-, -CH₂CH₂-, -C₂F₄-, -CH=CH-, -C≡C- or a single bond,
Y is F, Cl, CN or a monohalogenated or polyhalogenated alkyl, alkenyl, alkenyloxy or alkoxy radical having 1 to 5 carbon atoms,
L is H or F, and
m is 0, 1 or 2,
and one or more compounds selected from the group consisting of the general formulae II, III, IV, V, VI, VII, VIII and IX: 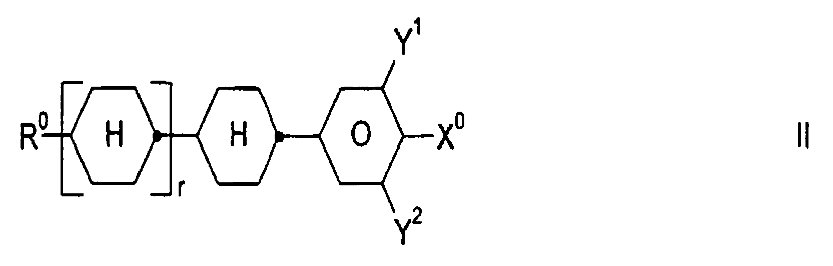 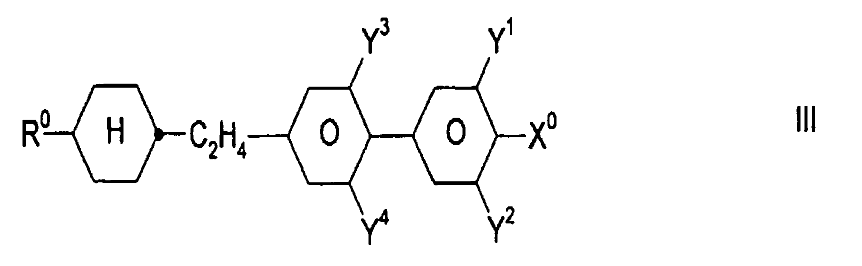 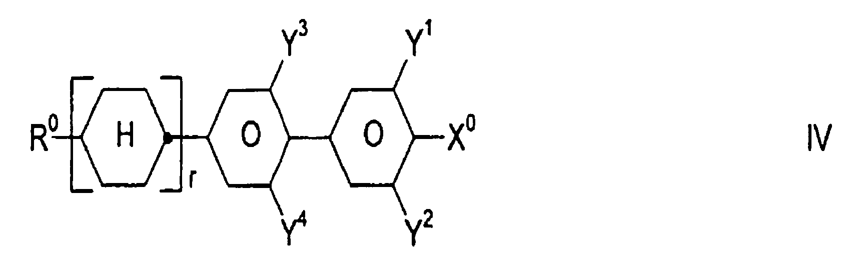 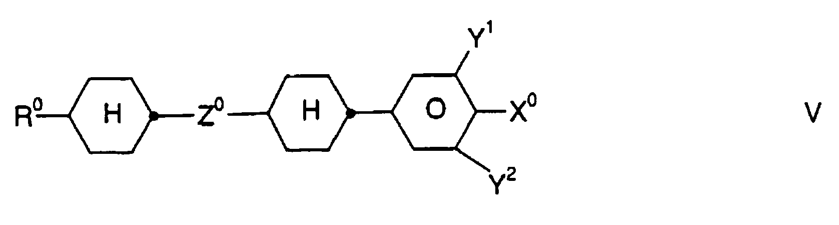 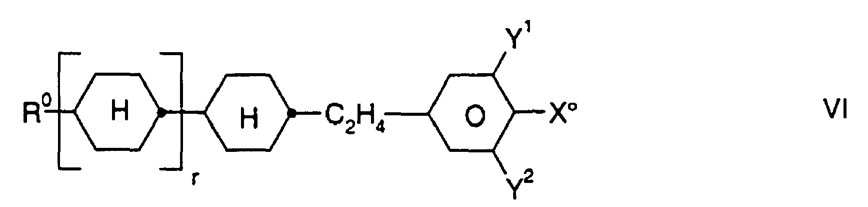 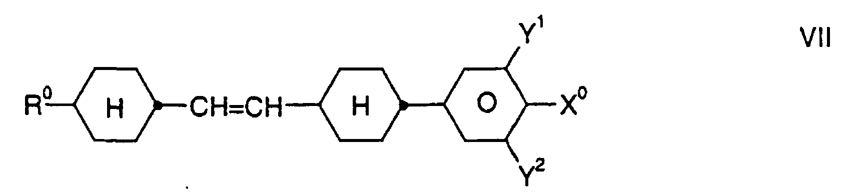 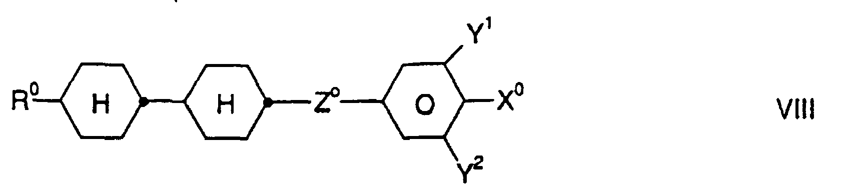 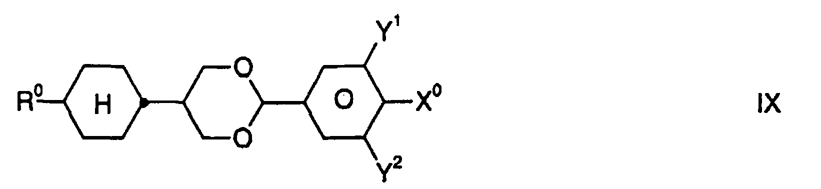 in which
R⁰ is n-alkyl, oxaalkyl, fluoroalkyl, alkenyloxy or alkenyl, in each case having up to 9 carbon atoms,
X⁰ is F, Cl, halogenated alkyl, alkenyl or alkoxy having 1 to 6 carbon atoms,
Z⁰ is ―C₂H₄-, -C₂F₄-, -CF₂O-, -OCF₂- or -COO-,
Y¹, Y², Y³ and Y⁴ are each, independently of one another, H or F, and
r is 0 or 1.

2. Liquid-crystalline medium according to Claim 1, **characterized in that** R is a straight-chain alkyl radical having 1 to 10 carbon atoms or an alkenyl radical having 2 to 10 carbon atoms.

3. Liquid-crystalline medium according to Claim 1 or 2, **characterized in that**
Y is F, CI, CN, CF₃, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCF₂CF₂CF₃, OCF₂CHFCF₃ or OCCLFCF₂CF₃.

4. Liquid-crystalline medium according to one of Claims 1 to 3, **characterized in that** m = 1.

5. Liquid-crystalline medium according to one of Claims 1 to 4, **characterized in that** it comprises phenol esters of the subformulae I1 to I12: 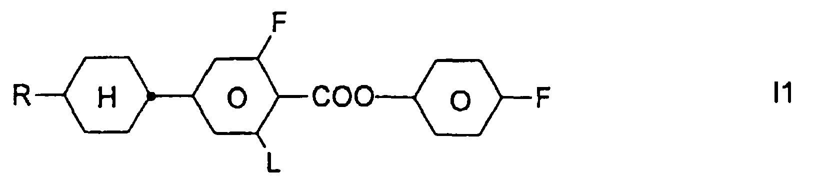 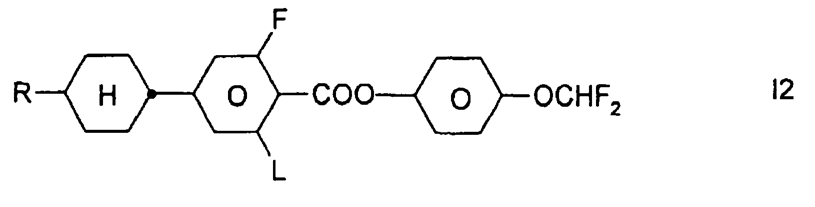 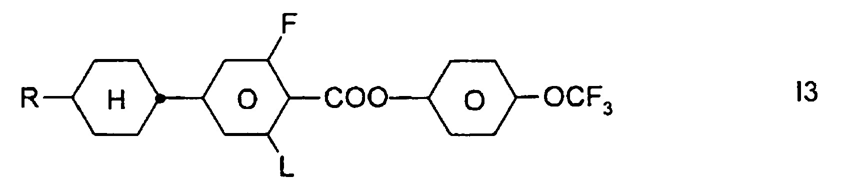 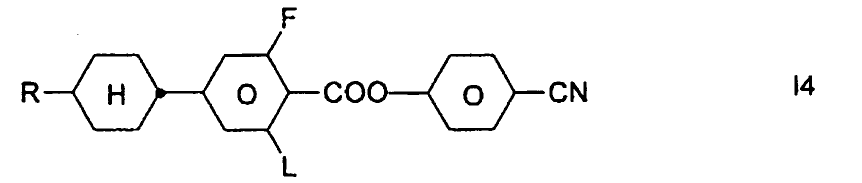 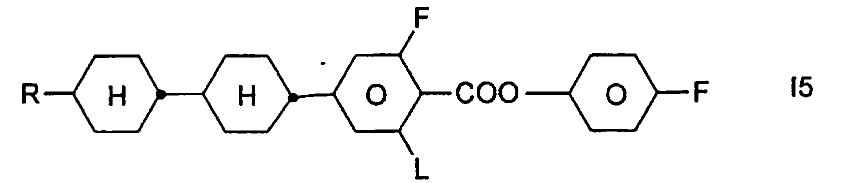 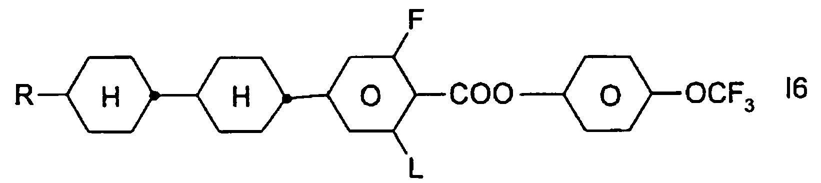 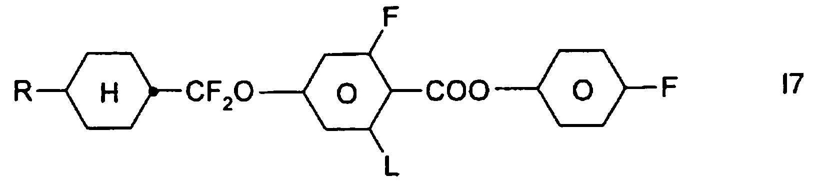 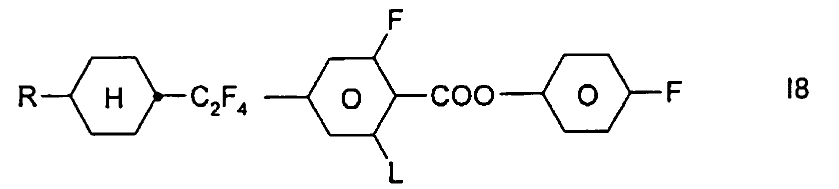 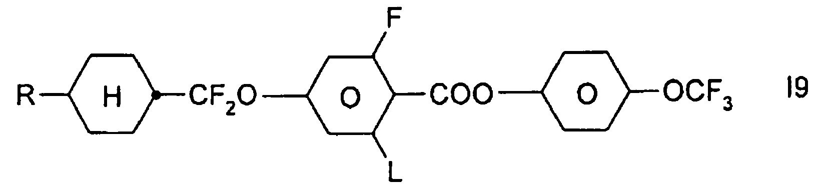 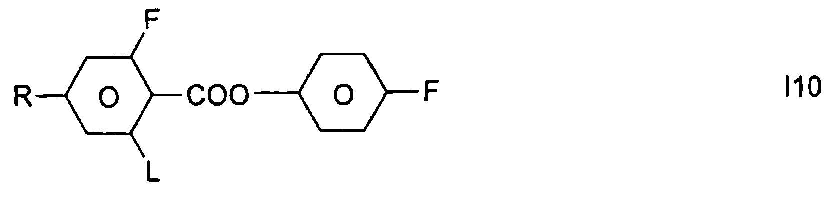 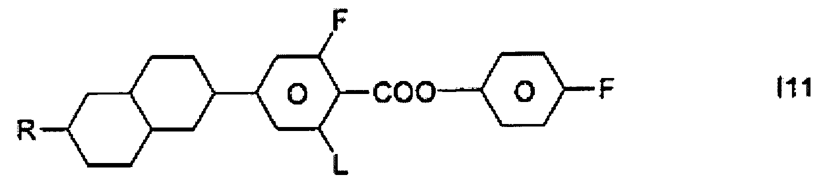 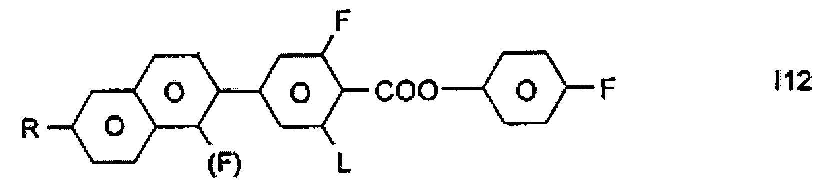 in which
R and L are as defined in Claim 1.

6. Medium according to one of Claims 1 to 5, **characterized in that** the proportion of compounds of the formulae I to IX in the total mixture is at least 50% by weight.

7. Liquid-crystalline medium according to one of Claims 1 to 6, **characterized in that** it additionally comprises one or more compounds of the formulae RI to RVI 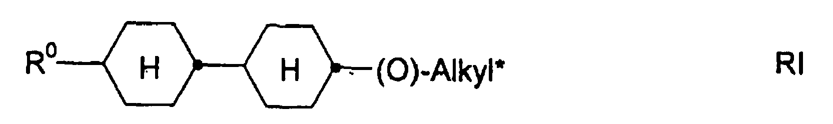 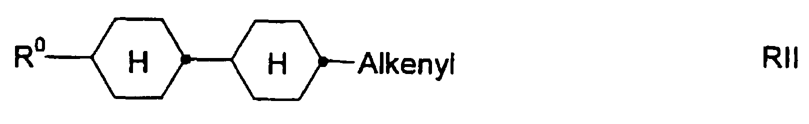 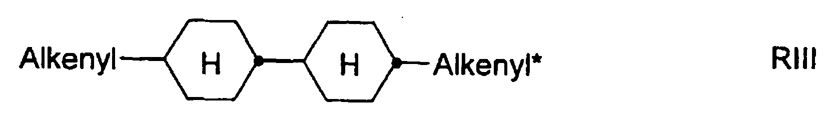 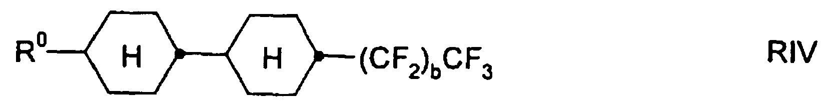 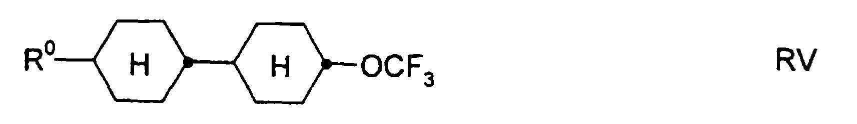 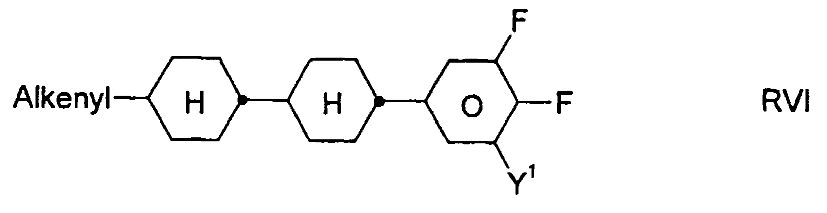 in which
R⁰ is n-alkyl, oxoalkyl, fluoroalkyl, alkenyloxy or alkenyl, in each case having up to 9 carbon atoms,
b is 0, 1 or 2,
Y¹ is H or F,
Alkyl* is a straight-chain alkyl radical having up to 9 carbon atoms,
Alkenyl or Alkenyl* are in each case, independently of one another, an alkenyl radical having up to 9 carbon atoms.

8. Liquid-crystalline medium according to one of Claims 1 to 7, **characterized in that** X⁰ are F or OCF₃ and Y²H or F.

9. Use of the liquid-crystalline medium according to one of Claims 1 to 8 for electro-optical purposes.

10. Electro-optical liquid-crystal display comprising a liquid-crystalline medium according to one of Claims 1 to 8.

## Revendications

1. Milieu à cristaux liquides, **caractérisé en ce qu'**il contient au moins un ester phénolique de formule I, 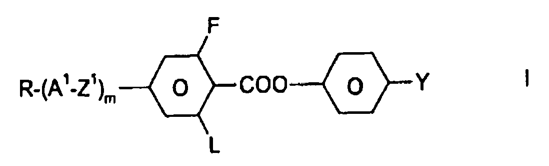 dans laquelle
R représente un radical alkyle ou alcényle ayant jusqu'à 15 atomes de carbone, non substitué ou substitué une fois par CN ou CF₃ ou au moins une fois par halogène, dans ces radicaux un ou plusieurs groupes CH₂ pouvant également être remplacés par ―O-, -S-, -C≡C- ―OC-O- ou ―O-CO- de sorte que des atomes d'oxygène ne soit pas directement liés entre eux,
A¹ représente
a) un radical 1,4-cyclohexénylène ou 1,4-cyclohexylène, dans lequel un ou deux groupes CH₂ non contigus peuvent être remplacés par ―O- ou ―S-,
b) un radical 1,4-phénylène dans lequel un ou deux groupes CH peuvent être remplacés par N,
c) un radical choisi dans l'ensemble constitué par les radicaux pipéridine-1,4-diyle, 1,4-bicyclo[2.2.2]octylène, naphtalène-2,6-diyle, décahydronaphtalène-2,6-diyle et 1,2,3,4-tétrahydronaphtalène-2,6-diyle
les radicaux a), b) et c) pouvant être substitués une ou plusieurs fois par des atomes d'halogène,
Z¹ représente ―CO-O-, -O-CO-, -CF₂O-, -OCF₂-, -CH₂O-, -OCH₂-, -CH₂CH₂-, -C₂F₄-, -CH=CH-, -C≡C- ou une liaison simple,
Y représente F, Cl, CN ou un radical alkyle, alcényle, alcényloxy ou alcoxy ayant de 1 à 5 atomes de carbone, une ou plusieurs fois halogéné,
L représente H ou F, et
m représente 0, 1 ou 2,
et
un ou plusieurs composés choisis dans l'ensemble constitué par les composés de formules générales II, III, IV, V, VI, VII, VIII et IX, 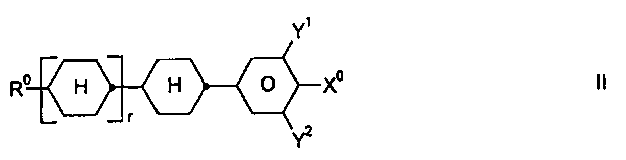 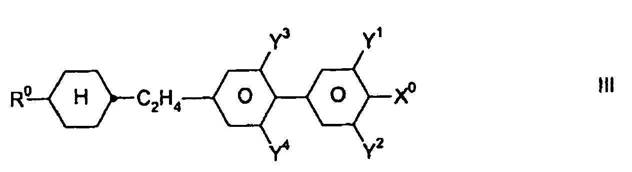 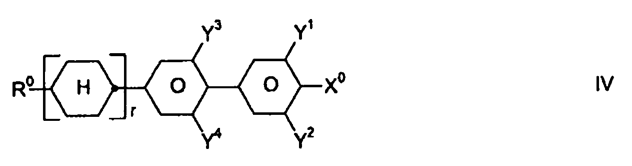 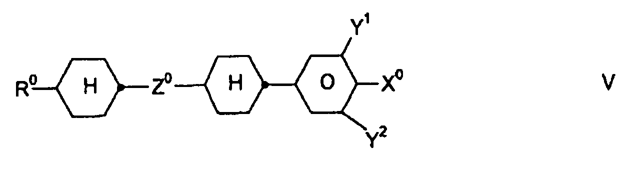 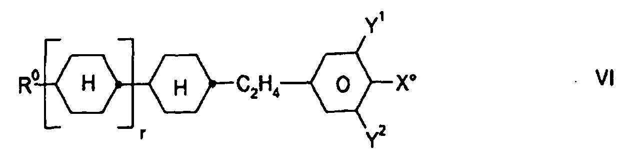 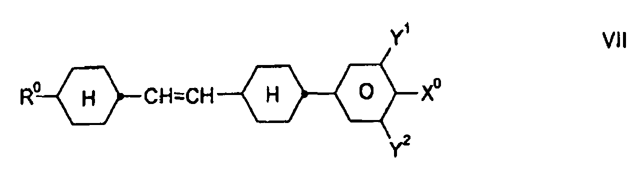 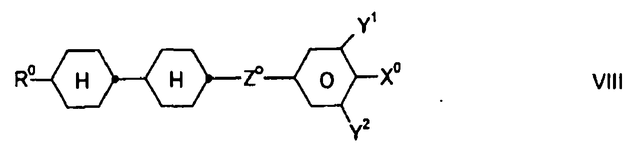 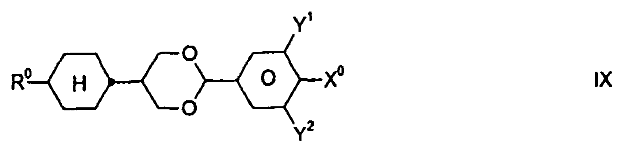 dans lesquelles
R⁰ représente un groupe n-alkyle, oxa-alkyle, fluoroalkyle, alcényloxy ou alcényle ayant chacun jusqu'à 9 atomes de carbone,
X⁰ représente F, CI, un groupe alkyle, alcényle ou alcoxy halogéné ayant de 1 à 6 atomes de carbone,
Z⁰ représente ―C₂H₄-, -C₂F₄-, -CF₂O-, -OCF₂- ou -COO-,
Y¹, Y², Y³ et Y⁴ représentent chacun, indépendamment les uns des autres, H ou F,
r représente 0 ou 1.

2. Milieu à cristaux liquides selon la revendication 1, **caractérisé en ce que** R représente un radical alkyle à chaîne droite ayant de 1 à 10 atomes de carbone ou un radical alcényle ayant de 2 à 10 atomes de carbone.

3. Milieu à cristaux liquides selon la revendication 1 ou 2, **caractérisé en ce que**
Y représente F, CI, CN, CF₃, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCF₂CF₂CF₃, OCF₂CHFCF₃ ou OCCIFCF₂CF₃.

4. Milieu à cristaux liquides selon l'une quelconque des revendications 1 à 3, **caractérisé en ce que** m = 1

5. Milieu à cristaux liquides selon l'une quelconque des revendications 1 à 4, **caractérisé en ce qu'**il contient des esters phénoliques de formules partielles I1 à I12: 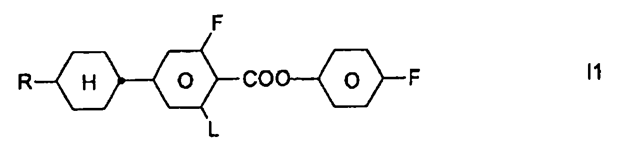 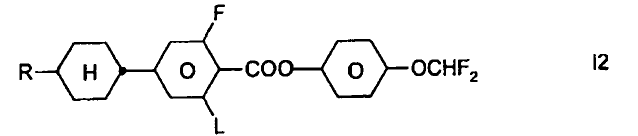 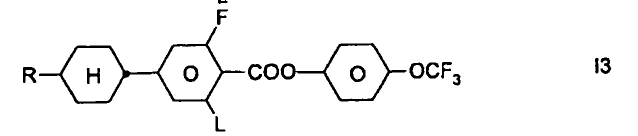 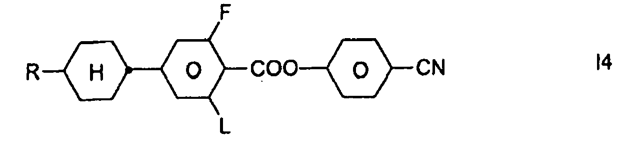 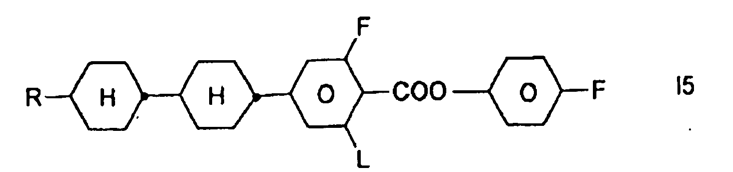 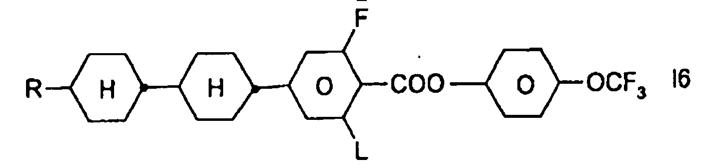 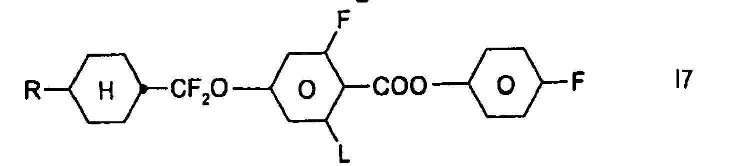 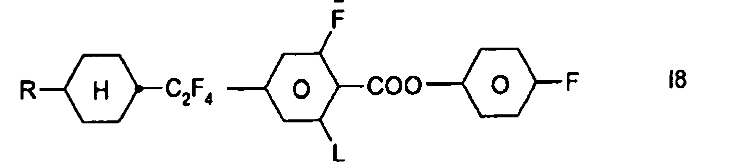 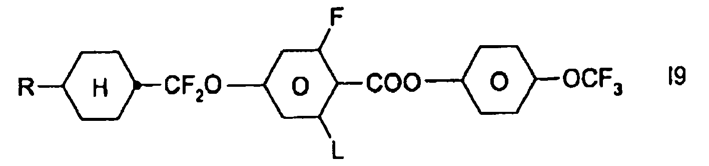 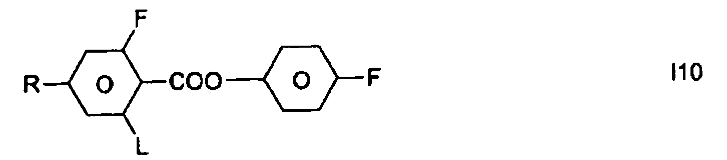 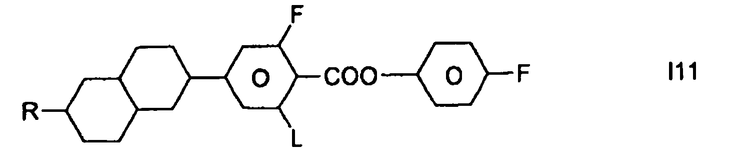 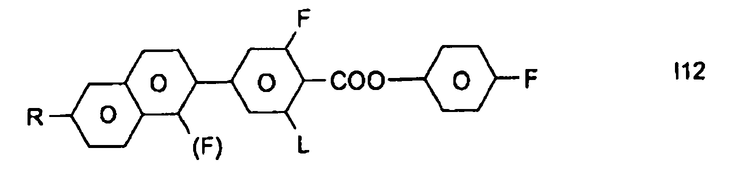 dans lesquelles
R et L ont les significations données dans la revendication 1.

6. Milieu selon l'une quelconque des revendications 1 à 5, **caractérisé en ce que** la proportions des composés de formule I à IX dans le mélange total est d'au moins 50 % en poids.

7. Milieu à cristaux liquides selon l'une quelconque des revendications 1 à 6, **caractérisé en ce qu'**il contient en outre un ou plusieurs composés de formules RI à RVI 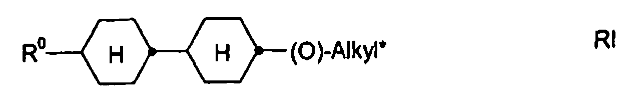 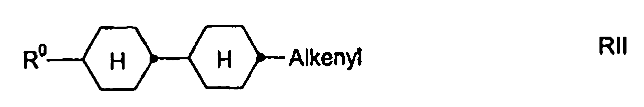 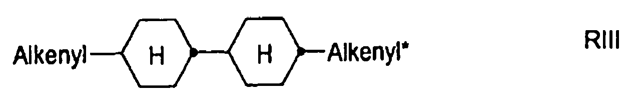 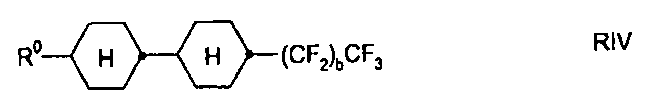 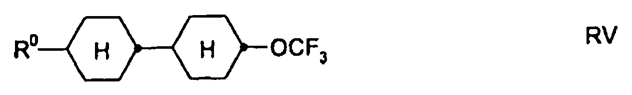 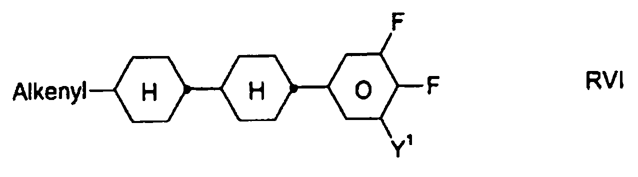 dans lesquelles
R⁰ représente un groupe n-alkyle, oxa-alkyle, fluoroalkyle, alcényloxy ou alcényle ayant chacun jusqu'à 9 atomes de carbone,
b représente 0, 1 ou 2,
Y¹ représente H ou F,
alkyle* représente un radical alkyle à chaîne droite ayant jusqu'à 9 atomes de carbone,
alcényle ou alcényle* représentent chacun, indépendamment l'un de l'autre, un radical alcényle ayant jusqu'à 9 atomes de carbone.

8. Milieu à cristaux liquides selon l'une quelconque des revendications 1 à 7, **caractérisé en ce que** X⁰ représente F ou OCF₃ et Y² représente H ou F.

9. Utilisation du milieu à cristaux liquides selon l'une quelconque des revendications 1 à 8, à des fins électro-optiques.

10. Afficheur électro-optique à cristaux liquides contenant un milieu à cristaux liquides selon l'une quelconque des revendications 1 à 8.
